# EUROPEAN PATENT APPLICATION

(11) **EP 4 817 925 A1**
(43) Date of publication of application: **07.10.2026**
(21) Application number: 23963239.1
(22) Date of filing: 26.12.2023
(51) Int. Cl.: B60K 35/55, B60K 35/60, B60K 35/65, B60K 35/22, B60K 35/80

(54) **VEHICLE DISPLAY DEVICE HAVING MULTIPLE DISPLAYS AND OPERATION METHOD THEREOF**

(71) Applicant: LG Electronics Inc., Yeongdeungpo-gu Seoul 07336 (KR)
(72) Inventor: CHO, Jaehoon, Seoul 06772 (KR); CHOO, Zhimin, Seoul 06772 (KR); CHO, Sungil, Seoul 06772 (KR)
(74) Representative: Vossius & Partner Patentanwälte Rechtsanwälte mbB
(86) International application number: PCT/KR2023/021563
(87) International publication number: WO 2025/143274

(57) **Abstract**

A display device for a vehicle and an operation method thereof are disclosed. A display device for a vehicle according to an embodiment of the present invention comprises: multiple displays formed on the front side of the main body and formed to be mountable on a vehicle dashboard; and a processor. The multiple displays comprise: a first display; a second display, a part of which is bendable; and a third display with a display screen size that is variable. When driving of the vehicle is detected while the second display among the multiple displays is in a first form factor that is flat, the processor controls the second display to change to a second form factor that is different from the first form factor. In addition, the processor may determine that there is a request for a change to the second form factor on the basis of at least one of sensing data of the vehicle, content displayed on the multiple displays, and an input request. In such a case, the processor may identify whether a change to the second form factor is possible on the basis of a driving situation of the vehicle, and may control the multiple displays to change to the form factor according to the determination.

## Description

### Technical Field

The present disclosure relates to a vehicle display device having multiple displays and an operation method thereof, and more particularly, to a vehicle display device having multiple displays in which the form factor is varied according to the situation and an operation method thereof.

### Background Art

A vehicle is an apparatus that moves in a direction desired by a user who gets on board. A representative example is an automobile.

Meanwhile, for the convenience of the user using the vehicle, there is a trend in which various sensors, electronic apparatuses, and the like are provided. In particular, research on an advanced driver assistance system (ADAS) is being actively carried out for the user's convenience in driving. Furthermore, development of autonomous vehicles is being actively carried out.

Automatic driving of a vehicle refers to a system that allows the vehicle to determine and drive by itself. The autonomous driving can be divided into gradual stages ranging from non-automation to full automation depending on the extent to which the system is involved in driving and the extent to which the driver controls the vehicle.

The autonomous driving of the vehicle has changed to recognize the vehicle as a staying space rather than a simple means of transportation. In addition, it has increasingly become a trend to mount a large-screen display on the vehicle so as to allow various infotainment to be freely enjoyed according to the automatic driving of the vehicle. As such, when mounting a large display device, it should be designed to fully satisfy the user's infotainment usability without obstructing the driver's field of view.

### Disclosure of Invention

### Technical Problem

An aspect of the present disclosure is to solve the foregoing and other problems.

According to some embodiments of the present disclosure, an aspect thereof is to provide a vehicle display device having multiple displays with variable form factors so as to improve infotainment usability for each situation while securing a driver's field of view, and an operation method thereof.

In addition, according to some embodiments of the present disclosure, another aspect thereof is to provide a vehicle display device having multiple displays that can be modified into an optimal type to match a driving situation of a vehicle, the need of an occupant, and the provided content/service, and an operation method thereof.

### Solution to Problem

To this end, a vehicle display device according to an embodiment of the present disclosure and an operation method thereof can be driven such that multiple displays including at least a flexible display panel are modified into an optimal type of form factor according to at least one of a driving situation of a vehicle, the characteristics of the content or service to be displayed, and a request based on an input.

The vehicle display device can be driven to form different form factors depending on whether the vehicle is driving or stopped.

Additionally, the vehicle display device, when modifying a form factor of multiple displays in response to an attribute of the requested content/service or a direct request from a user, checks whether the form factor can be modified in consideration of a driving situation of a vehicle.

Specifically, a vehicle display device according to an embodiment of the present disclosure can include a main body that can be mounted on a dashboard of the vehicle; multiple displays formed on a front surface of the main body, the multiple displays including a first display, a second display, a portion of which is provided to be bendable, and a third display provided to be variable in size of the display screen; and a processor. The processor can control the multiple displays to change, in response to the detection of driving of the vehicle while the second display of the multiple displays forms a flat first form factor, to a second form factor different from the first form factor, determine that there is a request for a change to the second form factor based on at least one of the sensing data of the vehicle, content displayed on the multiple displays, and an input request, and check whether a change to the second form factor is possible based on a driving situation of the vehicle so as to execute a change to the form factor according to the determination.

In an embodiment, the second form factor can have a structure in which the second display relatively moves in a first direction and at least a portion thereof is bent. Additionally, the processor can transmit a signal for changing to the second form factor to the multiple displays in response to a driving detection signal of the vehicle.

In an embodiment, the first form factor can have a structure in which the second display is flattened while relatively moving in a second direction opposite to the first direction. Additionally, the processor can transmit a signal for changing to the first form factor to the multiple displays in response to a driving stop signal of the vehicle.

In an embodiment, the request for a change to the second form factor can be generated based on at least one of a vehicle driving mode based on the sensing data of the vehicle, an attribute of content displayed on the multiple displays, and a user input request for the multiple displays. Additionally, the processor can determine whether to accept the request for a change to the second form factor in consideration of the driving situation of the vehicle related to the sensing data of the vehicle.

In an embodiment, the third display can be a structure supported by a first frame and a second frame formed to be movable relative to the first frame. Additionally, the processor can generate a form factor change request event based on an attribute of content displayed on the multiple displays and an input request so as to allow a screen size of the third display to be changed by varying a front exposure area according to a relative movement of the second frame.

In an embodiment, the processor can recognize that content displayed on the multiple displays is an infotainment attribute, and generate a form factor change request event for changing the screen size of the third display based on an input request for the second display.

In an embodiment, the second display can operate in one of a flat mode in which the display is flat, and a first bending mode and a second bending mode in which a degree of bending of at least a portion of the display is different, and the processor can generate a form factor change request event in which the second display is varied from the first bending mode to the second bending mode based on a use request for the third display in the second form factor.

In an embodiment, the processor can recognize a touch of a region of the second display in the second form factor state as a use request for the third display to generate a form factor change request event for changing a second bending mode in which a curvature of a bent portion of the second display is changed and a bottom portion is raised and lowered.

In an embodiment, the second display can have a structure that relatively rotates with respect to the main body so as to change a screen direction of the display. Additionally, the processor can generate a form factor change request event in which the bending of the second display is restored and the screen direction of the display is changed by relative rotation based on at least one of an attribute of content displayed on the multiple displays and a user's input request.

In an embodiment, the processor can determine to maintain the second form factor or a current form factor while a driving attention mode is detected based on the sensing data. Here, the driving attention mode can include a driver's driving on a general road based on the sensing data.

In an embodiment, the processor can sequentially or simultaneously generate a first request for changing a display direction of the second display and a second request for changing a screen size of the third display based on at least one of an attribute of screen-extendable content and a user input's request while the driving attention mode is not detected.

In an embodiment, the request for a change to the second form factor can include a request for extending and displaying the at least one content on two or more of the first to third displays after changing the form factor according to the first and second requests. Additionally, the processor can control the at least one content so as not to be extended to at least the first display while a driver's driving is detected according to the driving situation of the vehicle.

In an embodiment, the processor can determine, when the at least one content is extended to the second and third displays in response to the second form factor change request, a display mode of that content based on an attribute of the content and a type of the form factor to be changed, and vary a crop region for screen extension according to the determined display mode.

In an embodiment, the processor can maintain a current form factor of the multiple displays based on the driver's driving being detected according to the driving situation of the vehicle and the at least one content being driving regulation content. In this case, the processor can execute a switchable privacy mode (SPM) for the third display to display the at least one content.

In an embodiment, the processor can control, after a change to the second form factor, the multiple displays to modify the changed form factor into a previous state or the second form factor in consideration of the driving situation of the vehicle identified based on the sensing data of the vehicle.

### Advantageous Effects of Invention

According to a vehicle display device and an operation method thereof in accordance with an embodiment of the present disclosure, a form factor of multiple displays can be changed to an optimal type to match a driving situation of a vehicle, the need of an occupants, and the provided content/service, thereby ensuring a driver's field of view as well as improving infotainment usability for each situation.

Furthermore, according to a vehicle display device and an operation method thereof in accordance with an embodiment of the present disclosure, an experience is provided in which related content or services are provided in a more efficient and seamless format as the form factor varies according to a current driving mode of the vehicle.

In addition, according to a vehicle display device and an operation method thereof in accordance with an embodiment of the present disclosure, a fellow passenger in a passenger seat does not need to separately request a display manipulation, and a driver and the fellow passenger can operate respective devices in conjunction with a display without distracting each other.

Moreover, according to a vehicle display device and an operation method thereof in accordance with an embodiment of the present disclosure, various experiences can be provided in which an interior of the vehicle can be used in a desired form, such as an office space for video conferencing, a large screen viewing space for providing screen-extended content, and the like.

### Brief Description of Drawings

FIG. 1 is an exemplary block diagram for explaining a configuration of a vehicle related to the present disclosure.
FIG. 2A is an exemplary drawing of a display device mounted on a vehicle according to the present disclosure.
FIG. 2B is an exemplary block diagram for explaining a detailed configuration of a vehicle display device according to the present disclosure.
FIGS. 2C and 2D are drawings for explaining a display part having a structure that is movable up and down and partially bendable according to the present disclosure.
FIGS. 3 and 4 are drawings for explaining an example in which a second display part is implemented as one of a first form factor and a second form factor in a vehicle display device according to the present disclosure.
FIG. 5 is an exemplary drawing for explaining a form factor modification in which a size of a third display part is varied in a vehicle display device according to the present disclosure.
FIG. 6 is an exemplary drawing for explaining a form factor modification in which a direction of a second display part is changed in a vehicle display device according to the present disclosure, and FIG. 7 is an exemplary drawing for explaining a form factor modification in which a size of a third display part is additionally varied in FIG. 6.
FIG. 8 is an exemplary flowchart for explaining an operation method of a vehicle display device related to a form factor modification related to the present disclosure.
FIG. 9 is a drawing for explaining a form factor modification in which a size of a third display part corresponding to a passenger seat is varied by using a manipulation on a second display part in a vehicle display device according to the present disclosure.
FIG. 10 is a drawing for explaining a form factor modification that changes a degree of bending of a second display part in response to an input request for a third display part in a vehicle display device according to the present disclosure.
FIG. 11 is a block diagram for explaining an integrated control of a form factor modification among multiple displays according to various situations that can be generated in a vehicle.
FIG. 12 is a block diagram for explaining a possibility and an extent of a form factor modification among multiple displays depending on whether a vehicle is driving and a driving mode.
FIG. 13 is a flowchart for explaining a method of processing a request based on a driving situation of a vehicle, an attribute of displayed content, and an input request when a form factor change request is generated.
FIG. 14A is a flowchart for explaining various operation modes for displaying content on multiple displays according to a display mode of the requested form factor.
FIG. 14B is a flowchart for explaining a method of seamlessly displaying content on multiple displays according to a display mode of the requested form factor, and FIGS. 15A and 15B are drawings for explaining a method of variably applying a crop region in relation to FIG. 14B.

### Mode for the Invention

Hereinafter, description for disclosed in this specification will be described in detail with reference to the accompanying drawings, wherein the same or similar elements will be denoted by the same reference numerals independent of the drawing numerals, and overlapping description of the same or similar elements will be omitted. The suffixes "module" and "part" for elements used in the following description are given or used interchangeably in consideration of only the ease of writing the specification, and do not have meanings or roles that are distinguished from each other by themselves. In addition, in describing embodiments disclosed in this specification, when it is determined that a detailed description of related known technologies can obscure the subject matter of the embodiments disclosed in this specification, the detailed description thereof will be omitted. In addition, the accompanying drawings are provided only for a better understanding of the embodiments disclosed in this specification and are not intended to limit the technical concept disclosed in this specification, and therefore, it should be understood that the accompanying drawings include all modifications, equivalents and substitutes within the concept and technical scope of the present disclosure.

It will be understood that although the terms first, second, etc. can be used herein to describe various elements, these elements should not be limited by these terms. The terms are used merely for the purpose to distinguish one element from another element.

It should be understood that when an element is referred to as being "connected to" or "coupled to" another element, the element can be directly connected to or coupled to the other element or intervening elements can also be present. On the contrary, in case where an element is "directly connected" or "directly linked" to another element, it should be understood that there are no intervening elements present.

A singular representation can include a plural representation, unless the context clearly indicates otherwise.

The terms "include" or "have" used herein should be understood that they are intended to indicate the presence of a feature, a number, a step, an operation, an element, a component or a combination thereof disclosed in the specification, and the presence or additional possibility of one or more other features, numbers, steps, operations, elements, components or combinations thereof are not excluded in advance.

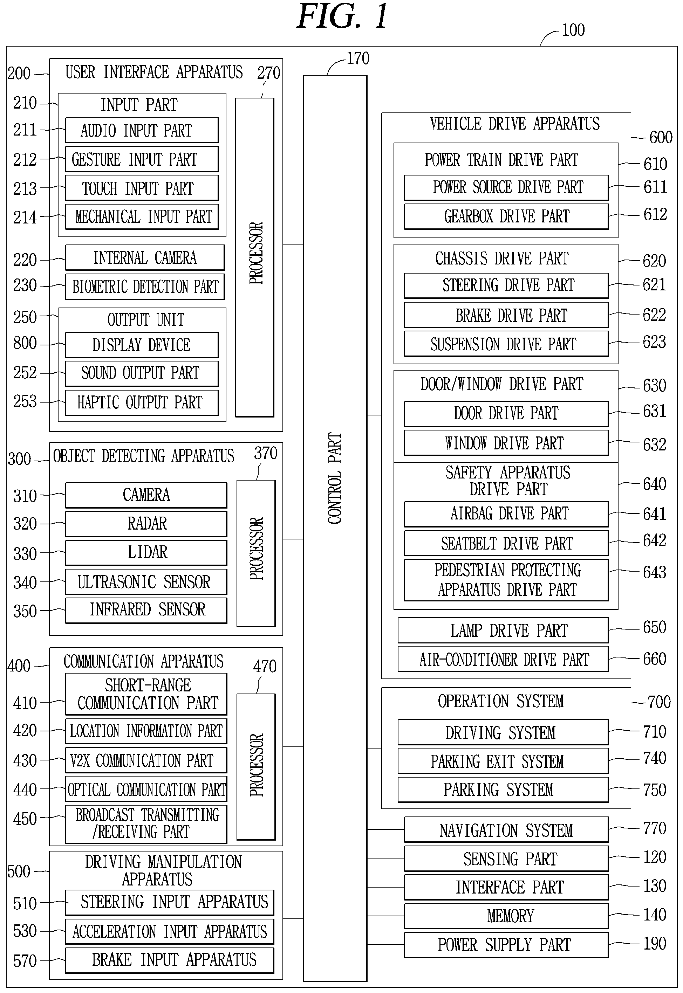

FIG. 1 is an exemplary block diagram for explaining the configuration of a vehicle related to the present disclosure.

Referring to FIG. 1, a vehicle 100 can include a wheel that rotates by a power source and a steering input apparatus 510 for adjusting a direction of travel of the vehicle 100.

The vehicle 100 can be an autonomous driving vehicle. The vehicle 100 can be switched into an autonomous driving mode or a manual mode based on a user input. For example, the vehicle 100 can be converted from the manual mode into the autonomous driving mode or from the autonomous driving mode into the manual mode based on a user input received through a user interface apparatus (hereinafter, referred to as a 'user terminal') 200.

The vehicle 100 can be switched into the autonomous driving mode or the manual mode based on driving situation information. The driving situation information can be generated based on object information provided from an object detecting apparatus 300. For example, the vehicle 100 can be switched from the manual mode into the autonomous driving mode or from the autonomous driving mode into the manual mode based on driving situation information generated in the object detection apparatus 300. In an example, the vehicle 100 can be switched from the manual mode into the autonomous driving mode or from the autonomous driving mode into the manual mode based on driving situation information received through a communication apparatus 400.

The vehicle 100 can be switched from the manual mode into the autonomous driving mode or from the autonomous driving mode into the manual mode based on information, data or signal provided from an external device.

When the vehicle 100 can be operated in the autonomous driving mode, the autonomous driving vehicle 100 can be operated based on an operation system 700. For example, the autonomous driving vehicle 100 can be driven based on information, data or signal generated in a driving system 710, a parking exit system 740 and a parking system 750.

When the vehicle 100 is driven in the manual mode, the autonomous driving vehicle 100 can receive a user input for driving through a driving manipulation apparatus 500. The vehicle 100 can be driven based on the user input received through the driving manipulation apparatus 500.

The vehicle 100 can include a user interface apparatus 200, an object detection apparatus 300, a communication apparatus 400, a driving manipulation apparatus 500, a vehicle drive apparatus 600, an operation system 700, a navigation system 770, a sensing part 120, an interface part 130, a memory 140, a control part 170, and a power supply part 190.

According to embodiments, the vehicle 100 can include more components in addition to components to be explained in this specification or can not include some of those components to be explained in this specification.

The user interface apparatus 200 is an apparatus for communication between the vehicle 100 and a user. The user interface apparatus 200 can receive a user input and provide information generated in the vehicle 100 to the user. The vehicle 100 can implement a user interface (UI) or user experience (UX) through a user interface apparatus (hereinafter, referred to as a 'user terminal') 200.

The user interface apparatus 200 can include an input part 210, an internal camera 220, a biometric detection part 230, an output part 250, and a processor 270. According to embodiments, the user interface apparatus 200 can include more components in addition to components to be explained in this specification or can not include some of those components to be explained in this specification.

The input part 210 can allow the user to input information, and data collected in the input part 210 can be analyzed by the processor 270 and processed as a user's control command.

The input part 210 can be arranged within the vehicle. For example, the input part 210 can be arranged on one region of a steering wheel, one region of an instrument panel, one region of a seat, one region of each pillar, one region of a door, one region of a center console, one region of a headlining, one region of a sun visor, one region of a windshield, one region of a window, or the like.

The input part 210 can include an audio input part 211, a gesture input part 212, a touch input part 213, and a mechanical input part 214.

The audio input part 211 can convert a user's voice input into an electric signal. The converted electric signal can be provided to the processor 270 or the control part 170. The audio input part 211 can include at least one microphone.

The gesture input part 212 can convert a user's gesture input into an electric signal. The converted electric signal can be provided to the processor 270 or the control part 170.

The gesture input part 212 can include at least one of an infrared sensor and an image sensor for detecting the user's gesture input. According to an embodiment, the gesture input part 212 can detect a user's three-dimensional (3D) gesture input. To this end, the gesture input part 212 can include a light output part outputting a plurality of infrared rays or a plurality of image sensors.

The gesture input part 212 can detect the user's 3D gesture input by a time of flight (TOF) method, a structured light method or a disparity method.

The touch input part 213 can convert the user's touch input into an electric signal. The converted electric signal can be provided to the processor 270 or the control part 170.

The touch input part 213 can include a touch sensor for detecting the user's touch input. According to an embodiment, the touch input part 213 can be integrated with the display part 251 so as to implement a touch screen. The touch screen can provide an input interface and an output interface between the vehicle 100 and the user.

The mechanical input part 214 can include at least one of a button, a dome switch, a jog wheel, and a jog switch. An electric signal generated by the mechanical input part 214 can be provided to the processor 270 or the control part 170. The mechanical input part 214 can be arranged on a steering wheel, a center fascia, a center console, a cockpit module, a door and the like.

The internal camera 220 can acquire an internal image of the vehicle. The processor 270 can detect a user's state based on the internal image of the vehicle. The processor 270 can acquire information related to the user's gaze from the internal image of the vehicle. The processor 270 can detect a user gesture from the internal image of the vehicle.

The biometric detection part 230 can acquire the user's biometric information. The biometric detection part 230 can include a sensor for detecting the user's biometric information and acquire fingerprint information and heart rate information regarding the user using the sensor. The biometric information can be used for user authentication.

The output part 250 can generate an output related to a visual, auditory or tactile signal. The output part 250 can include at least one of a display part, a sound output part 252 and a haptic output part 253.

Meanwhile, the display part can be used to refer to a vehicle display device 800 according to the present disclosure or multiple displays thereof. Alternatively, one of the display parts can include the vehicle display device 800 according to an embodiment of the present disclosure.

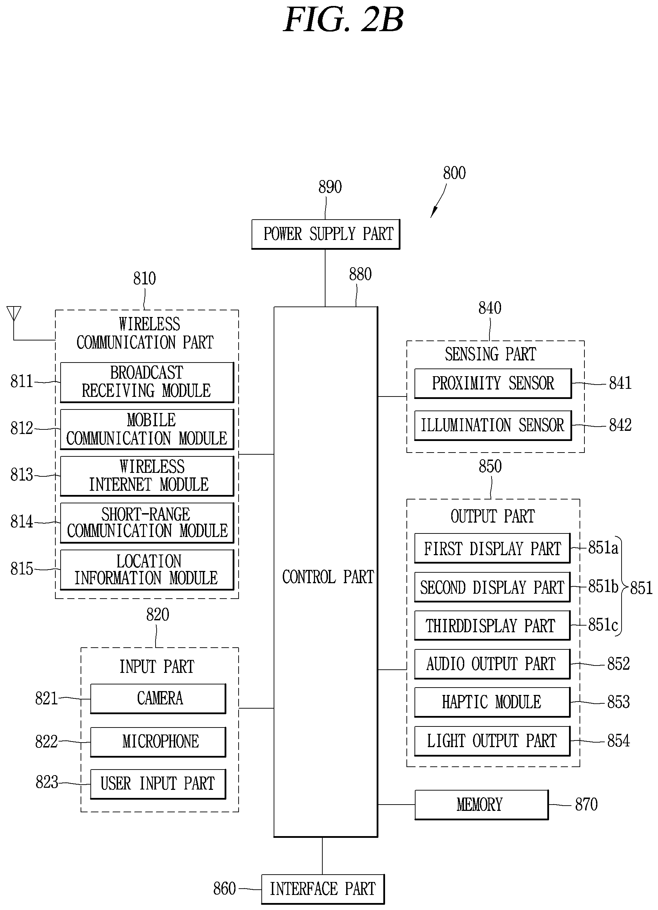

Additionally, meanwhile, the user interface apparatus 200 can be understood as having the same concept as the vehicle display device 800 according to the present disclosure. In this case, elements included in the user interface apparatus 200 of FIG. 1 and at least some of those of the vehicle display device 800 of FIG. 2B can be understood as having the same concept.

The display part can display graphic objects corresponding to various information. The display part can include at least one of a liquid crystal display (LCD), a thin film transistor-LCD (TFT LCD), an organic light-emitting diode (OLED), a flexible display, a three-dimensional 3D display and an e-ink display.

The display part can be inter-layered or integrated with a touch input part 213 to implement a touch screen.

The display part can be implemented as a head up display (HUD). When the display part is implemented as the HUD, the display part can be provided with a projecting module so as to output information through an image which is projected on a windshield or a window.

The display part can include a transparent display. The transparent display can be attached to the windshield or the window. The transparent display can display a predetermined screen with a predetermined transparency. In order to achieve transparency, the transparent display can include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display can be adjustable.

Meanwhile, the user interface apparatus 200 can include multiple display parts. In this case, the multiple display parts can be located in various regions in the vehicle.

The sound output part 252 can convert an electric signal provided from the processor 270 or the control part 170 into an audio signal for output. To this end, the sound output part 252 can include at least one speaker.

The haptic output part 253 generates a tactile output. For example, the haptic output part 253 can vibrate a steering wheel, a safety belt, a seat to allow the user to recognize such an output.

The processor (hereinafter, referred to as a 'control part') 270 can control an overall operation of each unit of the user interface apparatus 200. That is, the user interface apparatus 200 can operate according to the control of the control part 170.

According to an embodiment, the user interface apparatus 200 can include a plurality of processors 270 or can not include any processor 270.

When the processor 270 is not included in the user interface apparatus 200, the user interface apparatus 200 can operate according to a control of a processor of another apparatus within the vehicle 100 or the control part 170.

The object detection apparatus 300 is an apparatus for detecting an object located at outside of the vehicle 100. The object can be a variety of objects associated with driving (operation) of the vehicle 100. For example, the object can include an lanes, another vehicle, a pedestrian, a two-wheeled vehicle, a traffic signal, light, a road, a structure, a speed bump, a terrain feature, an animal, and the like.

Meanwhile, objects can be classified into a moving object and a fixed object. For example, the moving object can be a concept including another vehicle and a pedestrian. The fixed object can be a concept including a traffic signal, a road and a structure.

The object detection apparatus 300 can include a camera 310, a radar 320, a lidar 330, an ultrasonic sensor 340, an infrared sensor 350 and a processor 370.

According to an embodiment, the object detection apparatus 300 can further include other components in addition to the components described, or can not include some of the components described.

The camera 310 can be located on an appropriate portion outside the vehicle to acquire an external image of the vehicle. The camera 310 can be a mono camera, a stereo camera 310a, an AVM (Around View Monitoring) camera 310b, or a 360-degree camera.

For example, the camera 310 can be arranged in the interior of the vehicle, in close proximity to a front windshield, to acquire an image on the front of the vehicle. Or, the camera 310 can be arranged adjacent to a front bumper or a radiator grill.

For example, the camera 310 can be arranged in the interior of the vehicle, in close proximity to a rear glass, to acquire an image on the rear of the vehicle. Or, the camera 310 can be arranged adjacent to a rear bumper, a trunk or a tail gate.

For example, the camera 310 can be arranged in close proximity to at least one of side windows in the interior of the vehicle to acquire an image on the side of the vehicle. Or, the camera 310 can be arranged adjacent to a side mirror, a fender or a door.

The camera 310 can provide an acquired image to the processor 370.

The radar 320 can include electric wave transmitting and receiving portions. The radar 320 can be implemented as a pulse radar or a continuous wave radar according to a principle of emitting electric waves. The radar 320 can be implemented in a frequency modulated continuous wave (FMCW) manner or a frequency shift keying (FSK) manner according to a signal waveform, among the continuous wave radar methods.

The radar 320 can detect an object in a time of flight (TOF) manner or a phase-shift manner through the medium of electromagnetic waves, and detect a position of the detected object, a distance from the detected object and a relative speed with the detected object.

The radar 320 can be arranged on an appropriate position outside the vehicle for detecting an object which is located on the front, rear or side of the vehicle.

The lidar 330 can include laser transmitting and receiving portions. The lidar 330 can be implemented in a time of flight (TOF) manner or a phase-shift manner.

The lidar 330 can be implemented as a drive type or a non-drive type.

For the drive type, the lidar 330 can be rotated by a motor and detect object near the vehicle 100.

For the non-drive type, the lidar 330 can detect, through light steering, objects which are located within a predetermined range based on the vehicle 100. The vehicle 100 can include a plurality of non-drive type lidars 330.

The lidar 330 can detect an object in a time of flight (TOF) manner or a phase-shift manner through the medium of laser light, and detect a position of the detected object, a distance from the detected object and a relative speed with the detected object.

The lidar 330 can be arranged on an appropriate position outside the vehicle for detecting an object located on the front, rear or side of the vehicle.

The ultrasonic sensor 340 can include ultrasonic wave transmitting and receiving portions. The ultrasonic sensor 340 can detect an object based on an ultrasonic wave, and detect a position of the detected object, a distance from the detected object and a relative speed with the detected object.

The ultrasonic sensor 340 can be arranged on an appropriate position outside the vehicle for detecting an object located on the front, rear or side of the vehicle.

The infrared sensor 350 can include infrared light transmitting and receiving portions. The infrared sensor 340 can detect an object based on infrared light, and detect a position of the detected object, a distance from the detected object and a relative speed with the detected object.

The infrared sensor 350 can be arranged on an appropriate position outside the vehicle for detecting an object located on the front, rear or side of the vehicle.

The processor 370 can control an overall operation of each unit of the object detection apparatus 300.

The processor 370 can detect an object based on an acquired image, and track the object. The processor 370 can execute operations, such as a calculation of a distance from the object, a calculation of a relative speed with the object and the like, through an image processing algorithm.

The processor 370 can detect an object based on a reflected electromagnetic wave which an emitted electromagnetic wave is reflected from the object, and track the object. The processor 370 can execute operations, such as a calculation of a distance from the object, a calculation of a relative speed with the object and the like, based on the electromagnetic wave.

The processor 370 can detect an object based on a reflected laser beam which an emitted laser beam is reflected from the object, and track the object. The processor 370 can execute operations, such as a calculation of a distance from the object, a calculation of a relative speed with the object and the like, based on the laser beam.

The processor 370 can detect an object based on a reflected ultrasonic wave which an emitted ultrasonic wave is reflected from the object, and track the object. The processor 370 can execute operations, such as a calculation of a distance from the object, a calculation of a relative speed with the object and the like, based on the ultrasonic wave.

The processor 370 can detect an object based on reflected infrared light which emitted infrared light is reflected from the object, and track the object. The processor 370 can execute operations, such as a calculation of a distance from the object, a calculation of a relative speed with the object and the like, based on the infrared light.

According to an embodiment, the object detection apparatus 300 can include a plurality of processors 370 or can not include any processor 370. For example, each of the camera 310, the radar 320, the lidar 330, the ultrasonic sensor 340 and the infrared sensor 350 can include the processor in an individual manner.

When the processor 370 is not included in the object detection apparatus 300, the object detection apparatus 300 can operate according to the control of a processor of an apparatus within the vehicle 100 or the control part 170.

The object detection apparatus 400 can operate according to the control of the control part 170.

The communication apparatus 400 is an apparatus for performing communication with an external device. Here, the external device can be another vehicle, a mobile terminal or a server.

The communication apparatus 400 can perform the communication by including at least one of a transmitting antenna, a receiving antenna, and radio frequency (RF) circuit and RF device for implementing various communication protocols.

The communication apparatus 400 can include a short-range communication part 410, a location information part 420, a V2X communication part 430, an optical communication part 440, a broadcast transmitting/receiving part 450 and a processor 470.

According to an embodiment, the communication apparatus 400 can further include other components in addition to the components described, or can not include some of the components described.

The short-range communication part 410 is a unit for facilitating short-range communications. The short-range communication part 410 can support short-range communication using at least one of Bluetooth^{TM}, Radio Frequency Identification (RFID), Infrared Data Association (IrDA), Ultra Wideband (UWB), ZigBee, Near field communication (NFC), Wireless-Fidelity (Wi-Fi), Wi-Fi Direct, Wireless Universal Serial Bus (Wireless USB), and the like.

The short-range communication part 410 can construct short-range area networks to perform short-range communication between the vehicle 100 and at least one external device.

The location information part 420 is a unit for acquiring position information. For example, the location information part 420 can include a Global Positioning System (GPS) module or a Differential Global Positioning System (DGPS) module.

The V2X communication part 430 is a unit for performing wireless communications with a server (vehicle to infrastructure; V2I), another vehicle (vehicle to vehicle; V2V), or a pedestrian (vehicle to pedestrian; V2P). The V2X communication part 430 can include an RF circuit capable of implementing a communication protocol with an infrastructure (V2I), a communication protocol between vehicles (V2V) and a communication protocol with a pedestrian (V2P).

The optical communication part 440 is a unit for performing communication with an external device through the medium of light. The optical communication part 440 can include a light-emitting diode for converting an electric signal into an optical signal and sending the optical signal to the exterior, and a photodiode for converting the received optical signal into an electric signal.

According to an embodiment, the optical transmission part can be formed integrally with lamps provided on the vehicle 100.

The broadcast transmitting/receiving part 450 is a unit for receiving a broadcast signal from an external broadcast managing entity or transmitting a broadcast signal to the broadcast managing entity via a broadcast channel. The broadcast channel can include a satellite channel, a terrestrial channel, or both. The broadcast signal can include a TV broadcast signal, a radio broadcast signal and a data broadcast signal.

The processor 470 can control an overall operation of each unit of the communication apparatus 400.

According to an embodiment, the communication apparatus 400 can include a plurality of processors 470 or can not include any processor 470.

When the processor 470 is not included in the communication apparatus 400, the communication apparatus 400 can operate according to the control of a processor of another apparatus within the vehicle 100 or the control part 170.

Meanwhile, the communication apparatus 400 can implement a vehicle display device together with the user interface apparatus 200. In this instance, the display device for the vehicle can be referred to as a telematics device or an Audio Video Navigation (AVN) device.

The communication apparatus 400 can operate according to the control of the control part 170.

The driving manipulation apparatus 500 is an apparatus for receiving a user input for driving.

In a manual mode, the vehicle 100 can be operated based on a signal provided by the driving manipulation apparatus 500.

The driving manipulation apparatus 500 can include a steering input apparatus 510, an acceleration input apparatus 530 and a brake input apparatus 570.

The steering input apparatus 510 can receive an input regarding a driving (ongoing) direction of the vehicle 100 from the user. The steering input apparatus 510 is preferably configured in the form of a wheel allowing a steering input in a rotating manner. According to an embodiment, the steering input apparatus can also be configured in a shape of a touch screen, a touchpad, or a button.

The acceleration input apparatus 530 can receive an input for accelerating the vehicle 100 from the user. The brake input apparatus 570 can receive an input for braking the vehicle 100 from the user. Each of the acceleration input apparatus 530 and the brake input apparatus 570 is preferably configured in the form of a pedal. According to an embodiment, the acceleration input apparatus or the brake input apparatus can also be configured in the form of a touch screen, a touch pad or a button.

The driving manipulation apparatus 500 can operate according to the control of the control part 170.

The vehicle drive apparatus 600 is an apparatus for electrically controlling the driving of various apparatuses within the vehicle 100.

The vehicle drive apparatus 600 can include a power train drive part 610, a chassis drive part 620, a door/window drive part 630, a safety apparatus drive part 640, a lamp drive part 650, and an air-conditioner drive part 660.

According to an embodiment, the vehicle drive apparatus 600 can further include other components in addition to the components described, or can not include some of the components described.

Meanwhile, the vehicle drive apparatus 600 can include a processor. Each unit of the vehicle drive apparatus 600 can individually include a processor.

The power train drive part 610 can control an operation of a power train apparatus.

The power train drive part 610 can include a power source drive part 611 and a gearbox drive part 612.

The power source drive part 611 can perform a control for a power source of the vehicle 100.

For example, upon using a fossil fuel-based engine as the power source, the power source drive part 611 can perform an electronic control for the engine. Accordingly, an output torque and the like of the engine can be controlled. The power source drive part 611 can adjust the engine output torque according to the control of the control part 170.

For example, upon using an electric energy-based motor as the power source, the power source drive part 611 can perform a control for the motor. The power source drive part 611 can adjust a rotating speed, a torque and the like of the motor according to the control of the control part 170.

The gearbox drive part 612 can perform a control for a gearbox. The gearbox drive part 612 can adjust a state of the gearbox. The gearbox drive part 612 can change the state of the gearbox into drive (forward) (D), reverse (R), neutral (N) or parking (P).

Meanwhile, when an engine is the power source, the gearbox drive part 612 can adjust a locked state of a gear in the drive (D) state.

The chassis drive part 620 can control an operation of a chassis apparatus. The chassis drive part 620 can include a steering drive part 621, a brake drive part 622 and a suspension drive part 623.

The steering drive part 621 can perform an electronic control for a steering apparatus within the vehicle 100. The steering drive part 621 can change a driving direction of the vehicle.

The brake drive part 622 can perform an electronic control for a brake apparatus within the vehicle 100. For example, the brake drive part 622 can control an operation of brakes provided at wheels to reduce speed of the vehicle 100.

Meanwhile, the brake drive part 622 can individually control each of a plurality of brakes. The brake drive part 622 can differently control braking force applied to each of a plurality of wheels.

The suspension drive part 623 can perform an electronic control for a suspension apparatus within the vehicle 100. For example, the suspension drive part 623 can control the suspension apparatus to reduce vibration of the vehicle 100 when a bump is present on a road. Meanwhile, the suspension drive part 623 can individually control each of a plurality of suspensions.

The door/window drive part 630 can perform an electronic control for a door apparatus or a window apparatus within the vehicle 100.

The door/window drive part 630 can include a door drive part 631 and a window drive part 632.

The door drive part 631 can perform the control for the door apparatus. The door drive part 631 can control opening or closing of a plurality of doors of the vehicle 100. The door drive part 631 can control opening or closing of a trunk or a tail gate. The door drive part 631 can control opening or closing of a sunroof.

The window drive part 632 can perform the electronic control for the window apparatus. The window drive part 632 can control opening or closing of a plurality of windows of the vehicle 100.

The safety apparatus drive part 640 can perform an electronic control for various safety apparatuses within the vehicle 100.

The safety apparatus drive part 640 can include an airbag drive part 641, a seatbelt drive part 642 and a pedestrian protecting apparatus drive part 643.

The airbag drive part 641 can perform an electronic control for an airbag apparatus within the vehicle 100. For example, the airbag drive part 641 can control the airbag to be deployed upon a detection of a risk.

The seatbelt drive part 642 can perform an electronic control for a seatbelt apparatus within the vehicle 100. For example, the seatbelt drive part 642 can control passengers to be motionlessly seated in seats 110FL, 110FR, 110RL, 110RR using seatbelts upon a detection of a risk.

The pedestrian protecting apparatus drive part 643 can perform an electronic control for a hood lift and a pedestrian airbag. For example, the pedestrian protecting apparatus drive part 643 can control the hood lift and the pedestrian airbag to be open up upon detecting pedestrian collision.

The lamp drive part 650 can perform an electronic control for various lamp apparatuses within the vehicle 100.

The air-conditioner drive part 660 can perform an electronic control for an air conditioner within the vehicle 100. For example, the air-conditioner drive part 660 can control the air conditioner to supply cold air into the vehicle when internal temperature of the vehicle is high.

The vehicle drive apparatus 600 can include a processor. Each unit of the vehicle drive apparatus 600 can individually include a processor.

The vehicle drive apparatus 600 can operate according to the control of the control part 170.

The operation system 700 is a system that controls various driving modes of the vehicle 100. The operation system 700 can be operated in the autonomous driving mode.

The operation system 700 can include a driving system 710, a parking exit system 740 and a parking system 750.

According to an embodiment, the operation system 700 can further include other components in addition to the components described, or can not include some of the components described.

Meanwhile, the operation system 700 can include a processor. Each unit of the operation system 700 can individually include a processor.

According to an embodiment, the operation system 700 can be a sub concept of the control part 170 when it is implemented in a software configuration.

Meanwhile, according to an embodiment, the operation system 700 can be a concept including at least one of the user interface apparatus 200, the object detection apparatus 300, the communication apparatus 400, the vehicle drive apparatus 600, and the control part 170.

The driving system 710 can perform driving of the vehicle 100.

The driving system 710 can receive navigation information from a navigation system 770, transmit a control signal to the vehicle drive apparatus 600, and perform driving of the vehicle 100. The driving system 710 can receive object information from the object detection apparatus 300, transmit a control signal to the vehicle drive apparatus 600 and perform driving of the vehicle 100. The driving system 710 can receive a signal from an external device through the communication apparatus 400, transmit a control signal to the vehicle drive apparatus 600, and perform the driving of the vehicle 100.

The parking exit system 740 can perform an exit of the vehicle 100 from a parking lot.

The parking exit system 740 can receive navigation information from the navigation system 770, transmit a control signal to the vehicle drive apparatus 600, and perform the exit of the vehicle 100 from the parking lot. The parking exit system 740 can receive object information from the object detection apparatus 300, transmit a control signal to the vehicle drive apparatus 600 and perform the exit of the vehicle 100 from the parking lot. The parking exit system 740 can receive a signal from an external device through the communication apparatus 400, transmit a control signal to the vehicle drive apparatus 600, and perform the exit of the vehicle 100 from the parking lot.

The parking system 750 can perform parking of the vehicle 100.

The parking system 750 can receive navigation information from the navigation system 770, transmit a control signal to the vehicle drive apparatus 600, and park the vehicle 100. The parking system 750 can receive object information from the object detection apparatus 300, transmit a control signal to the vehicle drive apparatus 600 and park the vehicle 100. The parking system 750 can receive a signal from an external device through the communication apparatus 400, transmit a control signal to the vehicle drive apparatus 600, and park the vehicle 100.

The navigation system 770 can provide navigation information. The navigation information can include at least one of map information, information regarding a set destination, path information according to the set destination, information regarding various objects on a path, lane information and current location information of the vehicle.

The navigation system 770 can include a memory and a processor. The memory can store the navigation information. The processor can control an operation of the navigation system 770.

According to an embodiment, the navigation system 770 can update previously stored information by receiving information from an external apparatus through the communication apparatus 400.

According to an embodiment, the navigation system 770 can be classified as a sub component of the user interface apparatus 200.

The sensing part 120 can sense a status of the vehicle. The sensing part 120 can include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing part 120 can acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing part 120 can further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface part 130 can serve as a passage with various types of external devices connected to the vehicle 100. For example, the vehicle interface part 130 can be provided with a port connectable with a mobile terminal, and connected to the mobile terminal through the port. In this instance, the interface part 130 can exchange data with the mobile terminal.

Meanwhile, the vehicle interface part 130 can serve as a passage for supplying electric energy to the connected mobile terminal. When the mobile terminal is electrically connected to the vehicle interface part 130, the vehicle interface part 130 supplies electric energy supplied from a power supply part 190 to the mobile terminal according to the control of the control part 170.

The memory 140 is electrically connected to the control part 170. The memory 140 can store basic data for units, control data for controlling operations of units and input/output data. The memory 140 can be various storage apparatuses such as a ROM, a RAM, an EPROM, a flash drive, a hard drive, and the like in terms of hardware. The memory 140 can store various data for overall operations of the vehicle 100, such as programs for processing or controlling the control part 170.

According to an embodiment, the memory 140 can be integrated with the control part 170 or implemented as a sub component of the control part 170.

The control part 170 can control an overall operation of each unit of the vehicle 100. The control part 170 can be referred to as an electronic control unit (ECU).

The power supply part 190 can supply power for an operation of each element according to the control of the control part 170. Specifically, the power supply part 190 can receive power supplied from an internal battery of the vehicle, and the like.

At least one processor and the control part 170 included in the vehicle 100 can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

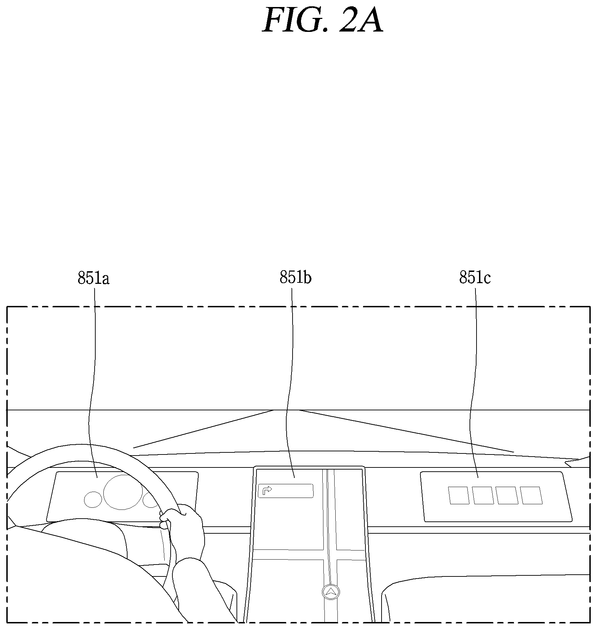

FIG. 2A is an exemplary drawing of the vehicle display device 800 mounted on a vehicle according to the present disclosure. Additionally, FIG. 2B is an exemplary block diagram for explaining a detailed configuration of a display device according to the present disclosure.

Meanwhile, the vehicle display device 800 can be understood as having the same or similar concept as the user interface apparatus 200 as described above in FIG. 1. However, the vehicle display device 800 described in an embodiment of the present disclosure, which is mounted on a dashboard of the vehicle 100, includes multiple displays.

As shown in FIG. 2A, the display device 800 according to an embodiment of the present disclosure can be mounted on a dashboard in the vehicle 100. The vehicle display device 800 can be implemented to include multiple displays on the dashboard that extend in a length direction from a driver's seat location to a passenger seat location.

The vehicle display device 800 can, for example, be mounted on the dashboard of the vehicle to control various apparatuses used for driving the vehicle, or display information necessary for driving the vehicle and information necessary for providing convenience to the vehicle occupants on multiple displays, that is, a display part 851.

The display part 851 can include a first display part 851a, a second display part 851b, and a third display part 851c, and they can be included in a single frame. Additionally, the display part 851 can be implemented in a wing type form as shown in FIG. 2A. Additionally, the display part 851 can be implemented to be seamlessly connected in a horizontal direction.

Referring to FIG. 2B, the vehicle display device 800 can include a wireless communication part 810, an input part 820, a sensing part 840, an output part 850, an interface part 860, a memory 870, a control part 880, a power supply part 890, and the like. The elements shown in FIG. 2B are not essential for implementing the vehicle display device, and thus the vehicle display device described herein can have more or fewer elements than those listed above.

More specifically, among the elements, the wireless communication part 810 can include one or more modules that allow wireless communication between the vehicle display device 800 and a wireless communication system, between the vehicle display device 800 and another vehicle display device 800, or between the vehicle display device 800 and an external server. In addition, the wireless communication part 810 can include one or more modules that connect the vehicle display device 800 to one or more networks.

The wireless communication part 810 can include at least one of a broadcast receiving module 811, a mobile communication module 812, a wireless Internet module 813, a short-range communication module 814, and a location information module 815.

The input part 820 can include a camera 821 or image input part for inputting an image signal, a microphone 822 or audio input part for inputting an audio signal, and a user input part 823 (e.g., a touch key, a push key (or mechanical key), etc.) for receiving information from a user. Voice data or image data collected by the input part 820 can be analyzed and processed by a user's control command.

The sensing part 840 can include one or more sensors for sensing at least one of information of the vehicle display device, surrounding environment information of the vehicle display device, and user information. For example, the sensing part 840 can include at least one of a proximity sensor 841, an illumination sensor 842, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (e.g., see the camera 821), a microphone 822, a battery gauge, an environment sensor (e.g., a barometer, a hygrometer, a thermometer, a radiation detection sensor, a thermal sensor, a gas sensor, etc.), and a chemical sensor (e.g., an electronic nose, a health care sensor, a biometric sensor, etc.). Meanwhile, the vehicle display device disclosed herein can utilize information items sensed by at least two or more of the sensors in combination.

The output part 850, which is configured to generate an output related to visual, auditory or tactile sense, can include a display part 851, an audio output part 852, a haptic module 853, a light output part 854. The display part 851 can have an inter-layered structure or an integrated structure with a touch sensor, thereby implementing a touch screen. The touch screen can function as the user input part 823 that provides an input interface between the vehicle display device 800 and the user while simultaneously providing an output interface between the vehicle display device 800 and the user.

The interface part 860 serves as a passage with various types of external devices connected to the vehicle display device 800. The interface part 860 can include at least one of a wired/wireless headset port, an external charger port, a wired/wireless data port, a memory card port, a port for connecting an apparatus having an identification module, an audio input/output (I/O) port, a video input/output (I/O) port, and an earphone port. The vehicle display device 800 can perform, in response to an external device being connected to the interface part 860, appropriate control related to the connected external device. In addition, the memory 870 stores data that supports various functions of the vehicle display device 800. The memory 870 can store multiple application programs or applications driven in the vehicle display device 800, data or instructions for the operation of the vehicle display device 800. At least some of the application programs can be downloaded from an external server via wireless communication. In addition, at least some of the application programs can be installed on the vehicle display device 800 from the time of release for the basic functions of the vehicle display device 800 (e.g., receiving a call, placing a call, receiving a message, sending a message). Meanwhile, the application program can be stored in memory 870, installed on the vehicle display device 800, and driven by the control part 880 to perform the operation (or function) of the vehicle display device.

The control part 880 typically controls an overall operation of the vehicle display device 800 in addition to the operation related to the application program. The control part 880 can provide or process appropriate information or functions for the user by processing signals, data, information, and the like, which are input or output through the foregoing elements, or driving an application program stored in the memory 870.

In addition, the control part 880 can control at least some of the elements described with FIG. 2B in order to drive an application program stored in the memory 870. Furthermore, the control part 880 can operate by combining at least two or more of elements included in the vehicle display device 800 with each other to drive the application program.

The power supply part 890 receives external power under the control of the control part 880 and supplies power to each element included in the vehicle display device 800. At least some of the elements can operate in cooperation with each other to implement an operation, control, or control method of a vehicle display device according to various embodiments described below. In addition, the operation, control or control method of the electronic device can be implemented on the vehicle display device by driving at least one application program stored in the memory 870.

Hereinafter, before describing various embodiments implemented through the foregoing vehicle display device 800, the elements listed above will be described in more detail with reference to FIG. 2B.

First, describing the wireless communication part 810, the broadcast receiving module 811 of the wireless communication part 810 receives broadcast signals and/or broadcast-related information from an external broadcast management server through a broadcast channel. The broadcast channel can include a satellite channel and a terrestrial channel. Two or more of the broadcast receiving modules can be provided to the vehicle display device 800 for simultaneous broadcast reception or broadcast channel switching for at least two broadcast channels.

The broadcast management server can refer to a server that generates and transmits broadcast signals and/or broadcast-related information, or a server that receives previously generated broadcast signals and/or broadcast-related information and transmits it to the vehicle display device. The broadcast signal can include not only a TV broadcast signal, a radio broadcast signal, and a data broadcast signal, but also a broadcast signal in which a TV broadcast signal or a radio broadcast signal is combined with a data broadcast signal.

The broadcast signal can be encoded according to at least one of the technical standards (or broadcasting methods, e.g., ISO, IEC, DVB, ATSC, etc.) for transmitting and receiving digital broadcast signals, and the broadcast receiving module 811 can receive the digital broadcast signal using a method suitable for the technical specifications set by the above technical standards.

The broadcast-related information can refer to information related to broadcast channels, broadcast programs, or broadcast service providers. The broadcast-related information can also be provided through a mobile communication network. In this case, it can be received by the mobile communication module 812.The broadcast-related information can exist in various forms, such as, for example, an electronic program guide (EPG) of digital multimedia broadcasting (DMB) or an electronic service guide (ESG) of digital video broadcast-handheld (DVB-H). Broadcast signals and/or broadcast-related information received through the broadcast receiving module 811 can be stored in the memory 860.

The mobile communication module 812 can transmit and/or receive wireless signals to and from one or more network entities. Typical examples of a network entity include a base station, an external terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). The wireless signal can include various types of data depending on a voice call signal, a video call signal, or a text/multimedia message transmission/reception.

The wireless Internet module 813 refers to a module for wireless Internet access. This module can be internally or externally coupled to the vehicle display device 800. The wireless Internet module 813 can transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 813 can transmit/receive data according to one or more of such wireless Internet technologies, and other Internet technologies as well. When the wireless Internet access is implemented according to, for example, WiBro, HSDPA, HSUPA, GSM, CDMA, WCDMA, LTE, LTE-A and the like, as part of a mobile communication network, the wireless Internet module 813 performs such wireless Internet access. As such, the Internet module 813 can cooperate with, or function as, the mobile communication module 812.

The short-range communication module 814 is configured to facilitate short-range communications. Suitable technologies for implementing such short-range communications include Bluetooth, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 814 can support wireless communication between the vehicle display device 800 and the wireless communication system, between the vehicle display device 800 and another vehicle display device 800, or between the vehicle display device 800 and a network where another vehicle display device 800 (or an external server) is located through short-range wireless area networks. The short-range wireless communication network can be short-range wireless personal area networks.

The location information module 815 is a module for acquiring a location (or current location) of a vehicle display device, and a representative example thereof includes a Global Positioning System (GPS) module or a Wireless Fidelity (WiFi) module. For example, when a vehicle display device utilizes a GPS module, it can acquire the location of the vehicle display device using signals sent from GPS satellites. As another example, when the vehicle display device uses the Wi-Fi module, a position of the vehicle display device can be acquired based on information related to a wireless access point (AP) which transmits or receives a wireless signal to or from the Wi-Fi module. If desired, the location information module 815 can alternatively or additionally function with any of the other modules of the wireless communication part 810 to obtain data related to the position of the vehicle display device. The location information module 815 is a module used for acquiring the position (or current position) of the vehicle display device and can not be limited to a module for directly calculating or acquiring the position of the vehicle display device.

Next, the input part 820 is for inputting image information (or signal), audio information (or signal), data, or information input from a user. For inputting image information, the vehicle display device 800 can include a plurality of cameras 821. Such cameras 821 can process image frames of still pictures or video obtained by image sensors in a video or image capture mode. The processed image frames can be displayed on the display part 851 or stored in memory 870. Meanwhile, the cameras 821 provided in the vehicle display device 800 can be arranged in a matrix configuration to permit a plurality of images having various angles or focal points to be input to the vehicle display device 800. In addition, the cameras 821 can be located in a stereoscopic arrangement to acquire left and right images for implementing a stereoscopic image.

The microphone 822 processes an external audio signal into electric audio (sound) data. The processed audio data can be processed in various manners according to a function being executed in the vehicle display device 800. If desired, the microphone 822 can include assorted noise removing algorithms to remove unwanted noise generated in the course of receiving the external audio signal.

The user input part 823 is a component that permits input by a user. Such user input can enable the control part 880 to control the operation of the vehicle display device 800 to correspond to the input information. The user input part 823 can include one or more of a mechanical input element (for example, a mechanical key, a button located on a front and/or rear surface or a side surface of the vehicle display device 800, a dome switch, a jog wheel, a jog switch, and the like), or a touch-sensitive input element, among others. As one example, the touch-sensitive input element can be a virtual key, a soft key or a visual key, which is displayed on a touch screen through software processing, or a touch key arranged a portion other than the touch screen. On the other hand, the virtual key or the visual key can be displayed on the touch screen in various shapes, for example, graphic, text, icon, video, or a combination thereof.

The sensing part 840 is generally configured to sense one or more of internal information of the vehicle display device, surrounding environment information of the vehicle display device, user information, or the like, and generate a corresponding sensing signal. The control part 880 can control operations of the vehicle display device 800 or execute data processing, a function or an operation associated with an application program installed in the vehicle display device 800 based on the sensing signal. The sensing part 840 can be implemented using any of a variety of sensors, some of which will now be described in more detail.

The proximity sensor 841 refers to a sensor to sense presence or absence of an object approaching a surface, or an object located near a surface, by using an electromagnetic field, infrared rays, or the like without a mechanical contact. The proximity sensor 841 can be arranged at an inner region of the vehicle display device covered by the touch screen, or near the touch screen.

The proximity sensor 841, for example, can include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared ray proximity sensor, and the like. When the touch screen is implemented as a capacitance type, the proximity sensor 841 can sense proximity of a pointer relative to the touch screen by changes of an electromagnetic field, which is responsive to an approach of an object with conductivity. In this case, the touch screen (touch sensor) can also be categorized as a proximity sensor.

The term "proximity touch" will often be referred to herein to denote the scenario in which a pointer is located to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 841 can sense proximity touch, and proximity touch patterns (for example, distance, direction, speed, time, position, moving status, and the like). In general, control part 880 processes data corresponding to proximity touches and proximity touch patterns sensed by the proximity sensor 841, and cause output of visual information on the touch screen. In addition, the control part 880 can control the vehicle display device 800 to execute different operations or process different data (or information) according to whether a touch with respect to a point on the touch screen is either a proximity touch or a contact touch.

A touch sensor can sense a touch (or a touch input) applied to the touch screen, such as the display part 851, using any of a variety of touch methods. Examples of such touch methods include a resistive type, a capacitive type, an infrared type, and a magnetic field type, among others.

As one example, the touch sensor can be configured to convert a change in pressure applied to a specific portion of the touch screen, or capacitance generated at a specific portion of the touch screen, into an electric input signal. The touch sensor can also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals can be transmitted to a touch controller. The touch controller can process the received signals, and then transmit corresponding data to the control part 880. Accordingly, the control part 880 can sense which region of the display part 851 has been touched. Here, the touch controller can be a component separate from the control part 880, the control part 880, and combinations thereof.

Meanwhile, the control part 880 can execute the same or different controls according to a type of touch object that touches the touch screen or a touch key provided in addition to the touch screen. Whether to execute the same or different control according to the object which provides a touch input can be determined based on a current operating state of the vehicle display device 800 or a currently executed application program, for example.

The touch sensor and the proximity sensor can be implemented individually, or in combination, to sense various types of touches. Such touches include a short (or tap) touch, a long touch, a multi-touch, a drag touch, a flick touch, a pinch-in touch, a pinch-out touch, a swipe touch, a hovering touch, and the like.

If desired, an ultrasonic sensor can be implemented to recognize location information relating to a touch object using ultrasonic waves. The control part 880, for example, can calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source can be calculated using this fact. For instance, the position of the wave generation source can be calculated using the time difference from the time that the ultrasonic wave reaches the sensor based on the light as a reference signal.

The camera 821, which has been depicted as a component of the input part 820, typically includes at least one a camera sensor (CCD, CMOS etc.), a photo sensor (or image sensors), and a laser sensor.

Implementing the camera 821 with a laser sensor can allow detection of a touch of a physical object with respect to a 3D stereoscopic image. The photo sensor can be laminated on, or overlapped with, the display device. The photo sensor can be configured to scan movement of the physical object in proximity to the touch screen. In more detail, the photo sensor can include photo diodes and transistors (TRs) at rows and columns to scan content received at the photo sensor using an electrical signal which changes according to the quantity of applied light. That is, the photo sensor can calculate the coordinates of the physical object according to variation of light to thus acquire location information of the physical object.

The display part 851 is generally configured to output information processed in the vehicle display device 800. For example, the display part 851 can display execution screen information of an application program driven at the vehicle display device 800 or user interface (UI) and graphic user interface (GUI) information in response to the execution screen information.

In addition, the display part 851 can be implemented as a stereoscopic display part for displaying stereoscopic images.

A typical stereoscopic display part can employ a stereoscopic display scheme such as a stereoscopic scheme (a glass scheme), an auto-stereoscopic scheme (glassless scheme), a projection scheme (holographic scheme), or the like.

The audio output part 852 can receive audio data from the wireless communication part 810 or output audio data stored in the memory 870 during modes such as a signal reception mode, a call mode, a record mode, a voice recognition mode, a broadcast reception mode, and the like. The audio output part 852 can provide audible output related to a particular function (e.g., a call signal reception sound, a message reception sound, etc.) performed by the vehicle display device 800. The audio output part 852 can also be implemented as a receiver, a speaker, a buzzer, or the like.

A haptic module 853 can be configured to generate various tactile effects that a user feels, perceives, or otherwise experiences. A typical example of a tactile effect generated by the haptic module 853 is vibration. The intensity and pattern of vibrations generated by the haptic module 853 can be controlled by the user's selection or the setting of the control part 880. For example, the haptic module 853 can output different vibrations in a combining manner or a sequential manner.

Besides vibration, the haptic module 853 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 853 can also be implemented to allow the user to feel a tactile effect through a muscle sensation such as the user's fingers or arm, as well as transferring the tactile effect through direct contact. Two or more haptic modules 853 can be provided according to the particular configuration of the vehicle display device 800.

An optical output part 854 can output a signal for indicating an event generation using light of a light source of the vehicle display device 800. Examples of events generated in the vehicle display device 800 can include message reception, call signal reception, a missed call, an alarm, a schedule notice, an email reception, information reception through an application, and the like.

A signal output by the optical output part 854 can be implemented in such a manner that the vehicle display device emits monochromatic light or light with a plurality of colors. The signal output can be terminated when the vehicle display device detects the user's event confirmation.

The interface part 860 serves as a passage for all external devices connected to the vehicle display device 800. For example, the interface part 860 can receive data transmitted from an external device, receive power to transfer to elements and components within the vehicle display device 800, or transmit internal data of the vehicle display device 800 to such external device. For example, the interface part 860 can include a wired/wireless headset port, an external charger port, a wired/wireless data port, a memory card port, a port for connecting an apparatus having an identification module, an audio input/output (I/O) port, a video input/output (I/O) port, an earphone port, and the like.

The identification module can be a chip that stores various information for authenticating authority of using the vehicle display device 800 and can include a user identity module (UIM), a subscriber identity module (SIM), a universal subscriber identity module (USIM), and the like. An apparatus having an identification module (hereinafter referred to as an 'identification apparatus') can be manufactured in the form of a smart card. Accordingly, the identification apparatus can be connected to the vehicle display device 800 via the interface part 860.

The memory 870 can store programs to support operations of the control part 880 and store input/output data (for example, phonebook, messages, still images, videos, etc.). The memory 870 can store data related to various patterns of vibrations and audio which are output in response to touch inputs on the touch screen.

The memory 870 can store data related to a form factor that can be changed through multiple displays constituting the display part 851. Additionally, the memory 870 can store data regarding various conditions in which the form factor of multiple displays is modified, such as driving, stopping driving, specific driving modes (e.g., autonomous driving mode, parking mode, etc.), an attribute of the requested content/service, a request by a user input, and the like. Additionally, the memory 870 can store relevant data to remember the form factor changed according to a control command of the control part 880.

The memory 870 can include one or more types of storage mediums including a flash memory type, a hard disk type, a solid state disk (SSD) type, a silicon disk drive (SDD) type, a multimedia cardmicro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The vehicle display device 800 can also be operated in relation to a network storage that performs the storage function of the memory 870 over a network, such as the Internet.

Meanwhile, as described above, the control part 880 can control an operation related to an application program, and typically control an overall operation of the vehicle display device 800. For example, the control part 880 can set or release a lock state for restricting a user from inputting a control command with respect to applications when a status of the vehicle display device meets a preset condition.

In addition, the control part 880 can perform control and processing related to voice calls, data communication, video calls, and the like, or perform pattern recognition processing that can recognize a handwriting input or picture drawing input performed on a touch screen as characters and images, respectively.

In addition, the control part 880 can control a driving mode for each of the multiple displays to change a form factor of the display part 851.

Specifically, the control part 880 can determine an optimal display form factor based on a driving state of the vehicle, an attribute of the requested content/service, and a user input request based on the sensing data of the vehicle. Additionally, the control part 880 can check whether a change to the determined form factor is possible in consideration of the current driving situation of the vehicle, and then transmit a control command to at least some of the multiple displays so as to control the change to that form factor.

Furthermore, the control part 880 can control any one or a plurality of the foregoing elements in order to implement various embodiments described below on the vehicle display device 800 according to the present disclosure.

The display part 851 is generally configured to output information processed in the vehicle display device 800. For example, the display part 851 can display execution screen information of an application program driven at the vehicle display device 800 or user interface (UI) and graphic user interface (GUI) information in response to the execution screen information.

The display part 851 can include at least one of a liquid crystal display (LCD), a thin film transistor liquid crystal display (TFT LCD), an organic light-emitting diode (OLED), a flexible display, a three-dimensional 3D display and an e-ink display.

In addition, two or more display parts 851 can be present according to an implementation form of the vehicle display device 800. In this case, the vehicle display device 800 can have multiple display parts spaced apart or integrally arranged on one side, and arranged on different sides, respectively.

The display part 851 can include a touch sensor that detects a touch on the display part 851 so as to receive a control command in a touch method. By utilizing this, when a touch is applied to the display part 851, the touch sensor can detect the touch, and the control part 880 can generate a control command corresponding to the touch based thereon. The content input by the touch method can be a character or number, or can by a menu item capable of indication or designation in various modes.

The display part 851 is configured to include multiple displays including a first display part 851a, a second display part 851b, and a third display part 851c. Additionally, at least some of the multiple displays can be flexible displays. Additionally, at least some of the multiple displays are implemented to enable relative movement, relative rotation, bending-out/in, or pop-up/down according to a control command so as to change the form factor of the display part 851.

Different content can be displayed on each of the first display part 851a, the second display part 851b, and the third display part 851c. Additionally, two or more of the first display part 851a, the second display part 851b, and the third display part 851c can be used as an extended screen to display single content or related content connected thereto or in conjunction therewith.

At least some of the first display part 851a, the second display part 851b, and the third display part 851c can be driven to change the form factor based on a control command of the control part 880. In this case, the content displayed on at least some of the first display part 851a, the second display part 851b, and the third display part 851c can be adjusted to have an aspect ratio, screen size, screen direction, and content attribute that are suitable for the changed form factor.

The microphone 822 can be configured to receive the user's voice, other sounds, and the like. The microphone 822 can be provided at a plurality of places, and configured to receive stereo sounds.

The interface part 860 serves as a passage that can connect the vehicle display device 800 to an external device. For example, the interface part 860 can be at least one of a connection terminal for connecting to another device (for example, an earphone, an external speaker, or the like), a port for near field communication (e.g., an Infrared Data Association (IrDA) port, a Bluetooth port, a wireless LAN port, etc.), or a power supply terminal for supplying power to the vehicle display device 800. The interface part 860 can be implemented in the form of a socket that accommodates an external card such as a subscriber identification module (SIM), a user identity module (UIM), and a memory card for storing information.

At least one antenna for wireless communication can be provided on the vehicle display device. The antenna can be embedded into the vehicle display device or formed on the case. For example, the antenna forming a portion of the broadcast receiving module 811 (see FIG. 2B) can be configured to be withdrawable from the vehicle display device. Alternatively, the antenna can be formed as a film type to be attached to an inner surface of the housing or a case including a conductive material can be configured to function as the antenna.

Meanwhile, the "driving of a vehicle" disclosed herein below can include starting driving after starting the vehicle, driving above a predetermined speed, temporary stopping while driving (due to waiting for a signal, traffic congestion, etc.), and driving for parking, and includes both autonomous and manual driving.

In addition, the "stopping driving of a vehicle" disclosed herein below can include cases where a predetermined time period has been exceeded before starting the vehicle, before starting driving after starting the vehicle, or after temporary stopping while driving.

In addition, a "form factor change" or "form factor modification" disclosed herein means that relative movement, relative rotation, bending-out/in, pop-up/down, and roll-up/down are performed on at least some of the multiple displays, thereby changing a structural shape of at least some of the display parts. The "form factor change" or "form factor modification" includes both a case where the shape of only one of the multiple displays is changed, and a case where the shapes of the multiple displays are changed sequentially or simultaneously.

In addition, the "multiple displays" disclosed herein each perform control and display independently. The "multiple displays" disclosed herein have a structure located on a front surface of the same frame of the display device to extend in a horizontal direction at a dashboard location of the vehicle. Additionally, at least some of the "multiple displays" disclosed herein have an independently relatively movable or rotatable structure, and in this case, a wider variety of form factors can be formed depending on a shape combination among the displays.

Specifically, the multiple displays are implemented to include a first display part located to correspond to the driver's seat location, a third display part located to correspond to the passenger seat location, and a second display part located between the first and third display parts.

For example, the "first display part" disclosed herein can be a cluster. Additionally, the "second display part" disclosed herein can be referred to as a center information display (CID), and the "third display part" can be referred to as a passenger information display (PID).

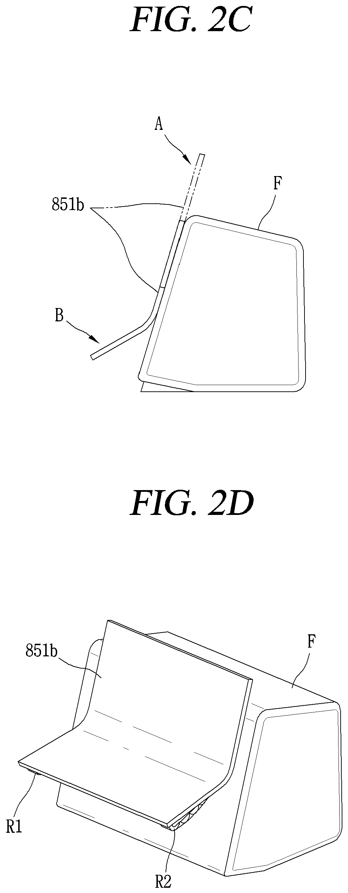

FIGS. 2C and 2D are drawings for explaining a specific operation of a display, for example, the second display part 851b (or CID), having a structure that is movable in an up-down direction and partially bendable in a display device according to the present disclosure.

First, referring to FIG. 2C, the second display part 851b is fixed to a frame F on a rear surface thereof so as to operate to relatively move up and down according to a control signal.

When the second display part 851b relatively moves upward along a guide rail (not shown), a display surface thereof becomes flat to be a first shape A.

Meanwhile, when the second display part 851b slides downward and relatively moves along the guide rail (not shown) and rollers R1, R2 on both lower sides thereof, at least a portion of the display surface bends out to form a second shape B. Although not shown in FIG. 2C, a bending-out of the second display part 851b can be located above the center. Additionally, although not shown in FIG. 2C, a lower portion of the bending-out in the second display part 851b can be supported by a triangular lower mounting bracket.

When a form factor change request is generated (or during a form factor change event), the control part 880 of the vehicle display device 800 analyzes and recognizes the shape of the form factor included in the request, checks the driving situation of the vehicle, and generates a control command to be transmitted to multiple displays.

When a control command for changing to a second shape B is received from the control part 880 of the vehicle display device 800, the second display part 851b slides downward to perform an operation of bending out at least a portion thereof. In this way, when the second display part 851b becomes the second shape B, a touch manipulation through a lower portion of the bending-out is facilitated without obstructing a driver's field of view while driving.

When a control command for changing to the first shape A is received from the control part 880 while the second display part 851b is in the second shape B, an operation of relatively moving upward is performed while unfolding the bent-out portion of the second display part 851b. In this way, when the second display part 851b becomes the first shape A, there is no screen distortion, so a large screen can be provided.

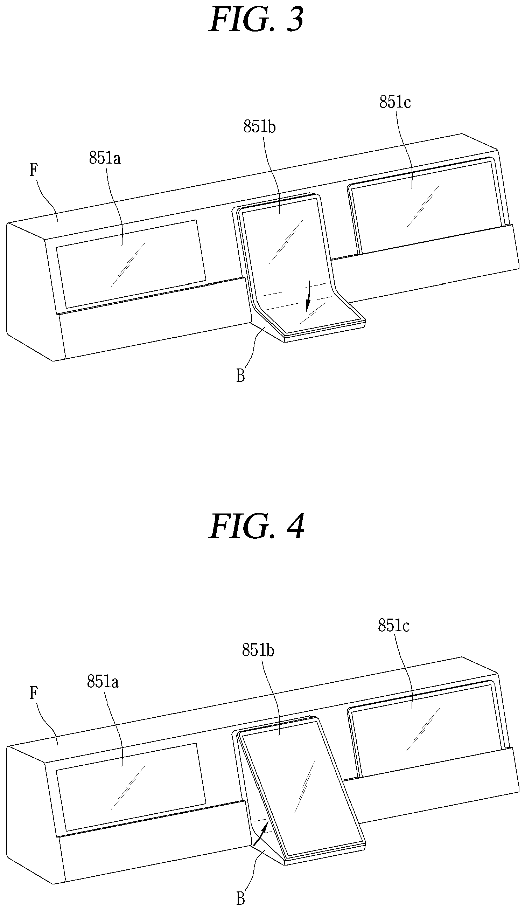

Meanwhile, although not illustrated in detail in FIGS. 2C and 2D, the control part 880 can include a curvature adjustment part capable of changing a degree of bending, that is, a degree of curvature, of the second display part 851b. The curvature adjustment part can change a degree of curvature so as to allow the second display part 851b to be further bent or straightened upward with respect to the mounting bracket B (see FIG. 3).

To this end, the control part 880 can be located by extending in a rear surface direction of the frame, and can include a display drive IC for driving the second display part 851b. In addition, the curvature adjustment part can further include a plurality of guide rails, links, link brackets, bearings, bending modules, and the like for changing a degree of curvature of the second display part 851b according to a signal received from the display drive IC.

Hereinafter, various examples in which the form factor of the display part 851 is modified according to a shape change of at least some of the multiple displays will be described in detail.

FIGS. 3 and 4 are drawings for explaining an example in which the second display part 851b is varied and implemented as one of the first form factor and the second form factor.

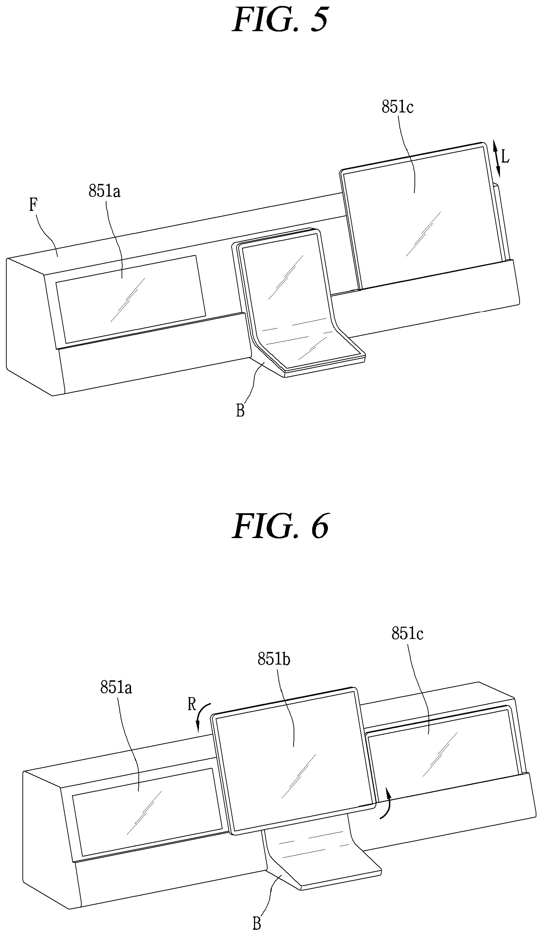

FIG. 5 is an exemplary drawing for explaining a form factor modification in which a size of the third display part 851c is varied.

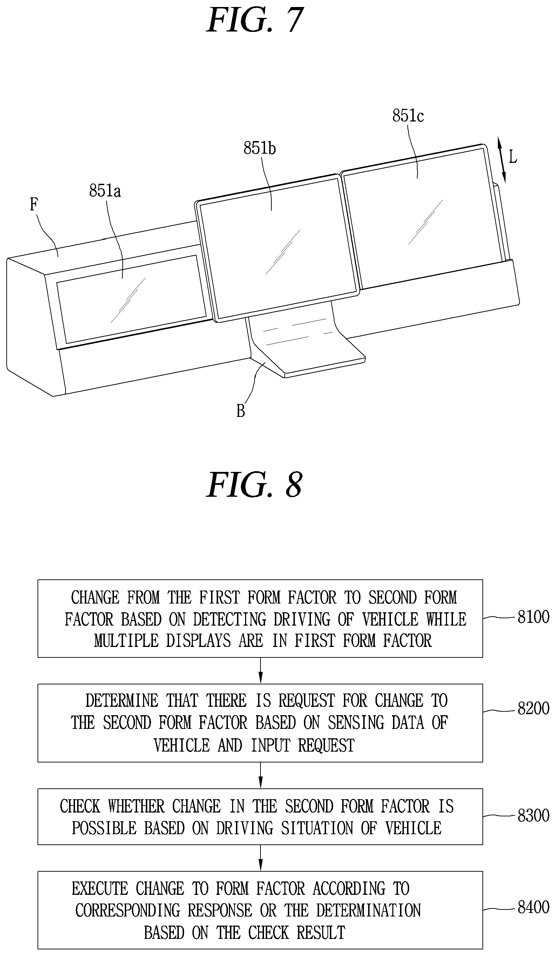

FIG. 6 is an exemplary drawing for explaining a form factor modification in which a direction of the second display part 851b is changed, and FIG. 7 is an exemplary drawing for explaining a form factor modification in which a size of the third display part 851c is additionally varied in FIG. 6.

Meanwhile, in the illustrated embodiments, the first to third display parts 851a, 851b, 851c are fixed to the same frame F on a rear surface thereof, and are located on the same horizontal line. Additionally, although a predetermined space is provided between the first to third display parts 851a, 851b, 851c for convenience of explanation, the first to third display parts 851a, 851b, 851c can be connected to one another with no empty space therebetween, thereby allowing the whole to be seamlessly displayed when a single extended screen is used.

First, a case where the vehicle display device 800 forms a first form factor and a second form factor will be described in detail with reference to FIGS. 3 and 4.

FIG. 4 is an example illustrating a first form factor in which a display surface of the second display part 851b is in a flat state.

When the vehicle stops, the display part 851 of the vehicle display device 800 can form a first form factor as shown in FIG. 4. In this case, vehicle stop can include before driving after starting the vehicle, a parking state, and when stopped to exceed a predetermined time period while driving.

In the first form factor, the second display part 851b forms a state in which the display surface is flat and is moved upward with respect to a lower mounting bracket B. In this case, when the second display part 851b changes from the shape shown in FIG. 3, the bent-out portion of the second display part 851b can operate to move upward along a plurality of rollers located between the second display part 851b and the lower mounting bracket B while unfolding. As the second display part 851b relatively moves upward, an upper surface of the second display part 851b can be located higher than a height of the frame F. In this case, a height of the first and third display parts 851a, 851c can be located lower than that of the second display part 851b. Additionally, depending on a relative movement of the second display part 851b, at least a portion (e.g., lower portion) of the lower mounting bracket B can be exposed.

Additionally, in the first form factor, the second display part 851b can be used as a large screen as a whole. For example, infotainment screens such as a navigation screen, menu screen, movie screen, and music playback screen in the first form factor can be displayed on the entire second display part 851b. Additionally, in the first form factor, the second display part 851b can be used as a single extended screen or a large screen related to the same content together with the other displays, that is, the first and third display parts 851a, 851c, in consideration with a current driving situation of the vehicle according to a request and an attribute of content.

FIG. 3 is an example illustrating a second form factor in which at least a portion of the display surface of the second display part 851b is bent out.

When driving a vehicle, the display part 851 of the vehicle display device 800 can form a second form factor modified so as to allow at least a portion of the second display part 851b to have a bent-out shape. In this case, vehicle driving can include starting driving after starting the vehicle, driving including a parking mode, slow driving, and stopping for a short time period during driving (e.g., waiting for a signal, traffic congestion, etc.).

In the second form factor, the second display part 851b relatively moves downward with respect to the lower mounting bracket B, thereby forming at least a portion of the display surface in a bent state, that is, a bent-out state. In this case, a location of a region where the second display part 851b is bent out (hereinafter, referred to as a 'bending region') can be varied depending on a shape and height of the lower mounting bracket B.

A display region of the second display part 851b, which is separated based on the bending region, can not be uniform for stable modification. For example, a lower region (hereinafter, referred to as a 'second region') of the second display part 851b can be bent out so as to become larger than an upper region (hereinafter, referred to as a 'first region') of the second display part 851b based on the bending region.

In the second form factor, content having different attributes can be distinguishably displayed in the first region and the second region of the second display part 851b, respectively. Additionally, in the bending region, an image is not displayed so as not to allow distortion, or magnification adjustment can be automatically performed for seamless display.

Specifically, a requested/set content or service screen can be displayed in the first region of the second display part 851b, and an input screen (e.g., control panel, menu, list, keyboard, etc.) for a touch manipulation can be displayed in the second region of the second display part 851b. The input screen of the second region can facilitate interaction with the screen displayed in the first region. In this case, when the second form factor is changed to the first form factor based on a control command, the input screen displayed in the separated second region disappears and the second display part 851b can be automatically changed to a large screen.

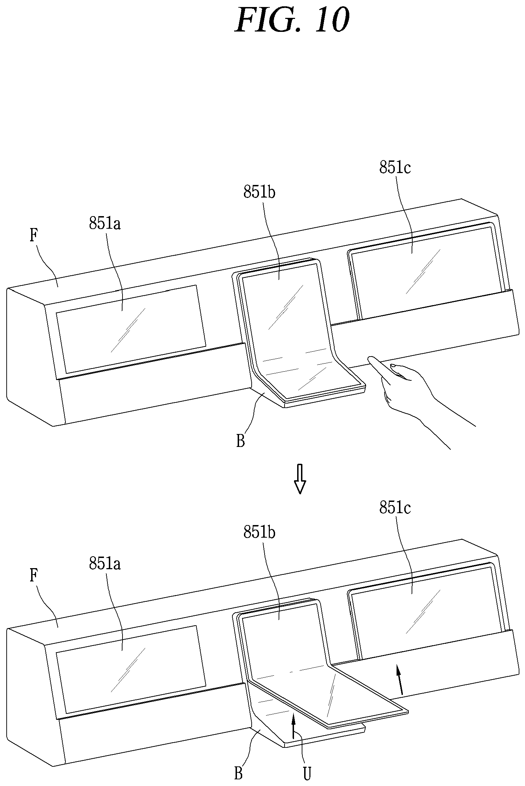

In the second form factor, a degree of curvature of the second display part 851b can be changed. The shape of the second display part 851b can take one of a flat mode in which the display surface is flat, a first bending mode in which at least a portion thereof is bent out to have a first curvature, and a second bending mode in which it is bent out to have a second curvature. The description of a specific operation related to a change between the first bending mode and the second bending mode will be described in more detail below with reference to FIG. 10.

Meanwhile, when changing from the second form factor to the first form factor, the second display part 851b slides upward with respect to the lower mounting bracket B along rollers on both sides thereof while unfolding a bent-out portion of the second display part 851b. In this case, the bent-out portion can be straightened out in proportion to a degree of relative movement of the second display part 851b.

When changing from the second form factor to the first form factor, the content displayed on the second display part 851b can be changed. For example, in the second form factor, a reduced content/service screen can be provided in the first region of the second display part 851b, and an input screen (e.g., a control panel such as a touch panel or a mouse panel) for performing interaction with the screen displayed in the first region can be provided in the second region. In this case, for example, a card-formatted widget in the first region can be scrolled left and right based on a touch input to the second region. Alternatively, icons of frequently used applications or widgets can be displayed in the second region. Subsequently, when changed to the first form factor, an input screen of the second region of the second display part 851b disappears, and the content/service screen that has been displayed in the first region can be extended and displayed as a full screen.

In addition, a change to the second form factor can be generated when it is recognized that there is a need to use the third display part 851c, in addition to a direct change request based on an attribute of content/service or an input request. Here, the need to use the third display part 851c can include both an intention of an occupant in the passenger seat and an intention of a driver to use it.

For example, when a need is detected for a driver to use the third display part 851c in a first form factor state (e.g., driver's gaze through a front camera, etc.), the display part 851 can be modified into the second form factor so as to allow a partial region (e.g., second region) of the second display part 851b to be used as an input region. In this case, a previously displayed screen (e.g., a navigation screen) is displayed in a reduced state in the first region of the second display part 851b, and an input screen for interacting with content (e.g., a widget, an application, etc.) displayed on the third display part 851c is displayed in the second region. Accordingly, the driver can also easily perform a screen manipulation on the third display part 851c corresponding to the passenger seat location when necessary.

Hereinafter, other form factor modification examples of the display part 851 will be described They can be named a third form factor, a form factor modification (change) corresponding to a request for a change to a second form factor, or a form factor modification.

FIG. 5 is a drawing for explaining a form factor modification in which the size of the third display 851c in the display device 800 is varied.

The third display 851c can pop up according to a control command of the control part 880 to increase the display size upward as increasing an exposed area of the display surface. Additionally, the third display 851c can be popped down according to a control command of the control part 880 in a pop-up state to reduce the display size downward as decreasing the exposed area of the display surface.

To this end, the third display 851c can include a first frame and a second frame, and a flexible display module can be supported by a first frame and a second frame formed to be movable relative to the first frame. Additionally, the third display 851c can include a pair of sliders that guide relative sliding movement up and down. In this case, although not illustrated in detail, each of the pair of sliders can include a horizontal plate and a vertical plate that is bent downward or rounded from an inner edge of the horizontal plate, and a "Π" shaped guide rail can be fitted into an outer edge of the horizontal plate.

When the third display 851c pops up, the first and second frames move away from each other, wherein a pair of sliders move as one with the second frame, and then the guide rail is fixed in an insertion groove to maintain the shape of the enlarged third display 851c. A variable length L of the third display 851c can vary depending on an attribute of the requested content/service and/or an input request in consideration of the driving situation of the vehicle. As an exposure area of the third display part 851c gradually increases and the variable length L gradually changes, the content displayed on the third display part 851c also extends.

While the variable length L of the third display 851c is reduced to a minimum, an upper end of the first display part 851a and an upper end of the third display 851c can be located on the same line. Additionally, while the variable length L of the third display 851c is extended to a maximum, the upper end of the third display 851c can be located at the highest among the multiple displays, or can be located on the same line as the upper end when the second display part 851b is moved up as much as possible in a portrait mode.

In another example, the third display 851c can operate in a form in which the display screen is extended or reduced while maintaining a state in which a portion of the display panel is bent in a space within the frame, for example, in a U-shape. In this case, there is little risk of damage to the panel while the entire third display 851c is not wound in a roll shape and a portion thereof is always exposed.

FIG. 6 is an exemplary drawing for explaining a form factor modification in which a display direction of the second display part 851b is changed. Additionally, FIG. 7 is an exemplary drawing for explaining a form factor modification in which a size of the third display part 851c is additionally varied in the form factor of FIG. 6.

The second display part 851b can perform a relative rotation movement (R) to change the display direction based on a control command of the control part 880.

To this end, although not described in detail, one or more plates, rotation shafts, shafts, brackets, sliders, and motors for providing rotational forces can be additionally provided on a rear surface of the second display part 851b as elements for changing the display direction to either a portrait mode or a landscape mode.

For example, when a control command corresponding to a landscape mode is received by the control part 880 of the vehicle display device 800 as a form factor change request, a rotational force can be generated to apply the rotational force to the second display part 851b in a horizontal direction (left-right direction) so as to change the display direction in a transverse direction. In this case, all or a portion of the lower mounting bracket B can be exposed, and both sides of the second display part 851b can overlap with portions of the first and third display parts 851a, 851c, respectively.

Similarly, when a control command corresponding to a portrait mode is received by the control part 880 of the vehicle display device 800 as a form factor change request, a rotational force can be generated to apply the rotational force to the second display part 851b in a vertical direction (up-down direction) so as to change the display direction in a longitudinal direction. In this case, the second display part 851b can be seamlessly connected to both sides of the first and third display parts 851a, 851c.

The relative rotation of the second display part 851b is performed independently of the vertical relative movement (and bending-out) of the second display part 851b described above.

For example, the second display part 851b can change to the foregoing first form factor and then perform a form factor modification that switches to a landscape mode based on a control command. Alternatively, for example, the second display part 851b can switch to a portrait mode, and then perform a modification into the aforementioned second form factor based on a control command.

Meanwhile, when the form factor is modified into a landscape mode, the second display part 851b, although not illustrated in detail, can be moved to the left or right by a predetermined distance.

When the second display part 851b is switched to a landscape mode, it can cover at least a portion of the first and third display parts 851a, 851c. Accordingly, during a relative rotation of the second display part 851b, it can be selectively additionally moved to the left or the right, thereby operating so as not to overlap with at least one display.

Specifically, upon receiving a request to change the form factor of the second display part 851b to a landscape mode, the control part 880 can determine a display that prevents screen obstruction in consideration of a display state of the first and third display parts 851a, 851c, an attribute of the displayed content, and a driving situation of the vehicle, and generate a control command by selecting a horizontal movement direction during a relative rotation movement of the second display part 851b according to the determination.

Referring to FIG. 7, a modification of the second display part 851b and a modification request of the third display part 851c can be performed sequentially or simultaneously, or the modification request of the third display part 851c can be generated based on additional input after the modification of the second display part 851b.

Specifically, the form factor can be modified such that the second display part 851b is switched to a landscape mode and the variable length L of the third display part 851c is increased simultaneously/sequentially.

Alternatively, in the form factor state of FIG. 7, the form factor can be modified such that the second display part 851b is switched to a portrait mode and the variable length L of the third display part 851c is reduced simultaneously/sequentially. This can refer to restoration to the first form factor, and can be generated, for example, based on a command to end the use of the vehicle display device 800.

According to an embodiment, sequential form factor modification requests to the second and third display parts 851b, 851c can be generated by matching an attribute of specific content/service. For example, when a screen extension mode is selected on the third display part 851c while the vehicle is stopped, a form factor modification can be performed in which the second display part 851b is switched to a landscape mode and the third display part 851c pops up upward simultaneously/sequentially.

In this way, the vehicle display device 800 according to an embodiment of the present disclosure can detect the driving of the vehicle while the second display part 851b of multiple displays forms a flat first form factor, and change to a second form factor different from the first form factor. Subsequently, when a request for a change to the second form factor is generated, it is checked whether it can be applied according to the driving situation of the vehicle, and then a modification to the form factor corresponding to the request is executed.

FIG. 8 is a representative flowchart for explaining an operation method of a display device related to various form factor modifications. The 'multiple displays' disclosed below are used to refer to the display part 851 or the first to third display parts 851a, 851b, 851c of the vehicle display device 800.

The vehicle display device 800 (FIG. 1) of the present disclosure includes multiple displays as described above. The multiple displays are configured such that the first display part 851a corresponds to a cluster of the driver's seat, the third display part 851c corresponds to a location of the passenger seat, and the second display part 851b is located between the first and third display parts 851a, 851c to form a large screen.

Here, at least a portion of the second display part 851b has a structure that is bendable, movable up and down, and allows a display direction to be varied by relative rotation. Additionally, the third display part 851c has a structure in which a size of the screen can be varied as it relatively moves in a longitudinal direction. Various form factor modifications are possible through a combination of the shape structures of the second and third display parts 851b, 851c as described above.

The processor (or control part) 880 of the vehicle display device 800 can execute form factor modifications by generating control commands for various situational form factor modifications and transmitting them to multiple displays.

Specifically, the control part 880 can transmit a control signal for changing the shape structure of the second and third display parts 851b, 851c to a corresponding module for each structure change operation. Accordingly, the second and third display parts 851b, 851c operate to perform structural changes separately or sequentially/simultaneously, thereby making a form factor modification suitable for the request.

Meanwhile, each step described below with reference to FIG. 8 is assumed to be performed by the control part 880 of the vehicle display device 800 unless otherwise stated. Additionally, a shape structure change for each of the multiple displays is performed independently. Additionally, various shape structure changes (e.g., relative rotation, vertical movement, bending-out) for a single display are also performed independently.

Referring to FIG. 8, first, multiple displays of the vehicle display device 800 can be controlled to change to a second form factor different from the first form factor by detecting the driving of the vehicle while the second display 851b forms a flat first form factor (8100).

Here, the first form factor can be an initial (basic) form factor state or a structure in which the second display becomes flattened while relatively moving in a second direction opposite to the first direction. In this case, the first direction can be a direction in which the second display part 851b slides downward along the lower mounting bracket B. Additionally, the second direction refers to a direction in which the second display part 851b moves upward against the lower mounting bracket B. Additionally, the initial (basic) form factor state can refer to a form factor set as a default.

The processor (or control part 880) can transmit a signal for changing to a first form factor to multiple displays in response to a vehicle driving stop signal. In this case, the driving stop signal can be generated before starting the vehicle, before starting driving after starting the vehicle, when stopped to exceed a predetermined time period while driving, and when the vehicle is parked.

For example, when a driver gets into the vehicle 100 to start up the engine, the vehicle display device 800 is turned on, and a welcome screen is displayed on at least some of the multiple displays in the first form factor state. Subsequently, a cluster screen can be displayed on the first display part 851a.

Upon detecting the driving of the vehicle, the processor (or control part 880) makes a request for the first form factor to be modified into the second form factor. Specifically, the processor (or control part 880) transmits a signal for changing to the second form factor to multiple displays in response to a driving detection signal of the vehicle. In this case, the driving detection signal can be generated after starting the vehicle, starting driving after starting the vehicle, and during driving.

Here, the second form factor can have a structure in which at least a portion of the second display part 851b is bent while relatively moving in a first direction. Here, the first direction can indicate a direction in which the second display part 851b slides downward along the lower mounting bracket B. Additionally, the at least the portion of the bending refers to a bending-out in which a preset portion of the second display part 851b is bent inward so as to be in contact with a surface of the lower mounting bracket B.

For example, when a welcome screen and a cluster screen are displayed while the multiple displays are in a first form factor, and then drive (D) is initiated, the multiple displays can be modified into a second form factor so as not to obstruct the driver's driving field of view. In this way, when changed to the second form factor, the second display part 851b is divided into a first region where content (e.g., navigation screen) is displayed and a second region for an interaction manipulation based on the bending region as described above.

Subsequently, during the driving of the vehicle, the vehicle display device 800 can determine that there is a request for a change to a second form factor based on at least one of the sensing data of the vehicle, content/a service displayed on multiple displays, and an input request (8200).

Specifically, a request for a change to the second form factor can be generated based on at least one of a driving state of the vehicle, an attribute of the requested content/service, and a direct input request.

For example, when the requested content/service includes an attribute of an extended screen mode, a form factor change request can be generated to change the second display part 851b to a landscape mode and pop up the third display part 851c.

As another example, in response to a direct input request, such as when a need to use the third display part 851c is detected, the second display part 851b can be bent or the form factor can be modified to increase a degree of bending in order to facilitate an interaction.

As still another example, according to a driving state change in which an autonomous driving mode is ended while using the extended screen mode, it can be automatically modified into a second form factor so as not to obstruct the driver's field of view.

Meanwhile, in embodiments, the priority of a request for a form factor change of multiple displays can be such that the driving state based on the sensing data of the vehicle takes precedence over an attribute of the content/service and a direct input request. This is to prioritize driving safety over the provision of convenient infotainment when needs are present simultaneously.

When it is determined that there is a request for a change to the second form factor as described above, the control part 880 checks whether a modification in the form factor according to the received request for the change to the second form factor is possible in consideration of a current driving situation of the vehicle (8300), and then executes a change to the form factor according to the determination (8400).

Specifically, when there is a request for a form factor change that obstructs the driver's field of view while the vehicle is driving, the processor (or control part 880) can display that it cannot be changed to the requested form factor on one of the second and third display parts 851b, 851c.

In an embodiment, the processor (or control part 880) can control multiple displays to change the form factor according to the driving state corresponding to the sensing data of the vehicle. For example, in a parking mode while driving, a form factor modification event can be generated in which the second display part 851b is changed to a portrait mode or a landscape mode to facilitate guidance according to the parking direction.

In addition, in an embodiment, the processor (or control part 880) can control multiple displays to change the form factor to match an attribute of the requested content/service.

For example, when a video conferencing mode is performed by using multiple displays while the vehicle is parked or stopped, the form factor can be modified into a shape as shown in FIG. 7, in which the second display part 851b changes shape to a landscape mode and the third display part 851c pops up simultaneously/sequentially. After the form factor is changed in this way, the presenter's material can be displayed on the second display part 851b, and a cam screen of conference participants can be displayed on the third display part 851c. Additionally, when the first display part 851a is used in an extended manner, a presenter mode screen such as a presenter material preview or a script can be displayed.

As yet still another example, when a screen extension mode is performed while watching a movie screen through the second display part 851b, a form factor in which the third display part 851c pops down is performed, thereby watching a movie on a large screen using the first to third display parts 851 on the same horizontal line. However, since the movie screen is being watched through the second display part 851b at this time, it is assumed that the vehicle is in a driving stop state.

As still yet another example, when an ambient mode is performed while the vehicle is parked or stopped, a form factor modification as shown in FIG. 7 can be performed in which the second display part 851b is switched to a landscape mode and the third display part 851c pops up. In this case, an associated ambient image (e.g., fire, aurora, forest, sky, space, etc.) can be seamlessly displayed in the first to third display parts 851, and an ambient light matching the displayed ambient image can be output in the vehicle.

As yet still another example, when a multi-view mode is performed while the vehicle is parked or stopped, in a form factor in which the second display part 851b is switched to a landscape mode and the third display part 851c pops up, a multi-view image (e.g., a sport, a game, etc.) or a music list can be displayed on the second display part 851b, and an image/music selected from the multi-view image or music list can be displayed in a full screen on the third display part 851c.

As still yet another example, when a text input is required for content/a service displayed on the second display part 851b or the third display part 851c while the second display part 851b is in the second form factor, the processor (or control part 880) can recognize the content attribute to generate a form factor request event. Specifically, when a text input request screen is displayed on the second display part 851b or the third display part 851c, a form factor modification can be performed so as to increase a degree of bending of the second display part 851b. In this way, when a bending region of the second display part 851b is further bent in a horizontal direction, an input region (e.g., virtual keyboard) appears in the second region, which is a lower region of the bending region. Accordingly, it becomes an interaction environment that is easier to input. In this case, when there is no input for a predetermined time period or when a text input request screen displayed on the second display part 851b or the third display part 851c is switched to another screen, a degree of bending of the second display part 851b can be automatically restored to its original state based on a control signal from the processor (or control part 880).

In addition, in an embodiment, the processor (or control part 880) can control multiple displays to change the form factor based on a direct input.

For example, the form factor can be modified such that the variable length L of the third display part 851c increases or decreases based on a touch gesture on the second display part 851b. As a specific example, when a two-finger flicking input is applied to the second region while a widget or application icon is displayed in the first region of the second display part 851b, the widget or application icon of the first region is displayed to fit a screen size of the third display part 851c in a pop-down state. On the contrary, when a three-finger flicking input is applied to the second region while a widget or application icon is displayed in the first region of the second display part 851b, the third display part 851c pops up and modifies into a form factor with an extended screen state, and then the widget or application icon of the first region is displayed. Here, the two-finger and three-finger flicking inputs can be replaced with different touch gestures or input methods that are distinguished from each other.

According to an embodiment, a form factor modification in which the driving of multiple displays is generated simultaneously or sequentially through a single direct input can be performed.

For example, when a swipe-up gesture is applied in a form factor state in which the second display part 851b is in a landscape mode, a form factor modification can be performed in which the second display part 851b is relatively rotated to become a landscape mode and the third display part 851c pops up. In this case, the aspect ratio and the displayed UI can be automatically adjusted to match the landscape mode and the pop-up aspect ratio. Similarly, when a swipe-down gesture is applied in a form factor in which the second display part 851b is in a portrait mode, a form factor modification can be performed in which the second display part 851b is relatively rotated to become a portrait mode and the third display part 851c pops down. In this case, the aspect ratio and the displayed UI can be automatically adjusted to match the changed portrait mode and the pop-down aspect ratio.

Meanwhile, the processor (or control part 880) of the vehicle display device 800 can change to a specific form factor or maintain a current form factor state (without changing the form factor) according to a preset priority when multiple different driving conditions are generated in relation to a form factor change request of multiple displays.

Specifically, a request for a change to a second form factor can be generated based on any one or two or more of the following: a vehicle driving mode based on the sensing data of the vehicle (e.g., start driving, an autonomous driving mode, a parking mode, etc.), an attribute of content displayed on the multiple displays (e.g., a screen extension mode, an input request screen, etc.), or a user input request for the multiple displays (e.g., a specific gesture, etc.) while the multiple displays are in the second form factor.

In this case, the processor (or control part 880) can determine whether to accept a request for a change to a second form factor in consideration of the driving situation of the vehicle related to the sensing data of the vehicle. That is, it is determined whether to change or maintain the form factor by prioritizing a current driving state and driving situation of the vehicle. Meanwhile, when requests for a change to a second form factor with the same priority are received sequentially, a request for a change to a second form factor is generated based on the form factor change request that has been requested later.

Meanwhile, when it is determined that the requested request for a change to a second form factor cannot be accepted in consideration of a current driving situation of the vehicle, the processor (or control part 880) can display a feedback response corresponding to the request through the display part (and speaker) related thereto.

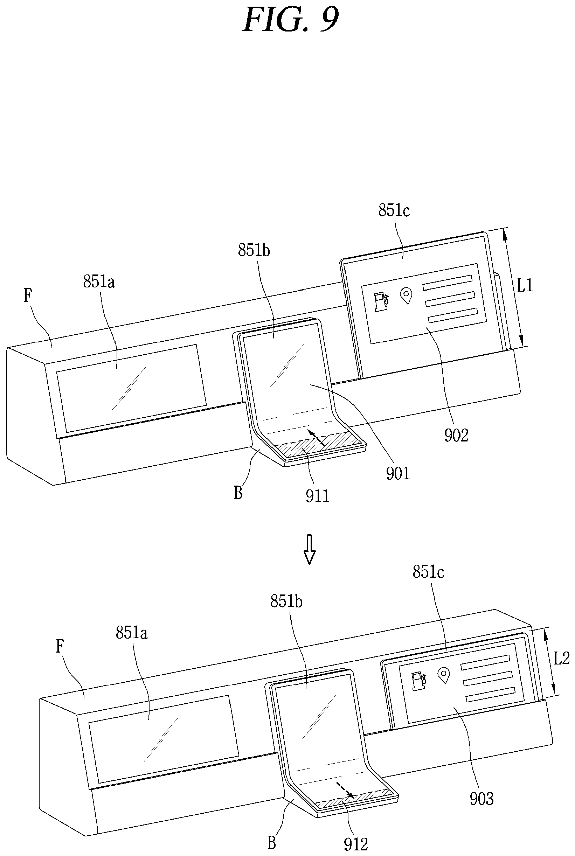

FIG. 9 is a specific example of a form factor modification in which a size of the third display part 851c corresponding to a passenger seat is varied by using a manipulation on the second display part 851b of the vehicle display device 800.

The third display part 851c is supported by a first frame and a second frame formed to be movable relative to the first frame, and a front exposed area of the display module increases/decreases according to a relative movement of the second frame to vary the display size.

Specifically, as the second frame moves relative to the first frame in a direction away therefrom (e.g., pop-up/roll-up upward), the front exposed area of the display module gradually increases to extend a screen size of the third display part 851c. Then, when the second frame relatively moves in a direction of approaching the first frame (e.g., pop-down/roll-down upward), a screen size of the third display part 851c is reduced as gradually decreasing the front exposed area of the display module.

The processor (or control part 880) can generate a form factor change request event based on a content attribute being displayed and an input request so as to change a screen size of the third display part by varying the front exposure area according to a relative movement of the second frame.

In one embodiment, the processor (or control part 880) can recognize that content displayed on the multiple displays is an infotainment attribute and generate a form factor change request event to change a screen size of the third display part 851c based on an input request for the second display part 851b.

In this case, an input request for the second display part 851b can include a request for the transmission of content-related data to display content displayed on the second display part 851b on the third display part 851c.

In FIG. 9, a content screen 901 can be displayed in the first region in a second form factor state in which the second display part 851b is bent out, and the second region can be used as a control panel.

In this case, when a specific gesture is applied to the second region (e.g., an upward three-finger flicking input 911), a vertical length (L1) of the third display part 851c increases, and the content screen that has been displayed in the first region of the second display part 851b can be displayed as a content screen 902 of the extended third display part 851c. The content screen 902 of the third display part 851c can be an infotainment screen such as a widget, an application icon, and a navigation screen. Additionally, the content screen 901 displayed in the first region of the second display part 851b can be continuously maintained.

Meanwhile, when such an input request for the second display part 851b is performed by the driver, a driving distraction that can be caused by an occupant in the passenger seat performing a manipulation on the second display part 851b is removed. Now, the occupant in the passenger seat can perform an interaction and screen view on the third display part 851c without a manipulation on a screen displayed on the second display part 851b.

Subsequently, in FIG. 9, when a specific gesture (e.g., a downward three-finger flicking input 912) is applied to the second region of the second display part 851b in a second form factor state, a form factor modification is performed in which a vertical length (L2) of the extended third display part 851c is reduced. In this case, a screen 903 adjusted to an aspect ratio and UI that is suitable for a size of the reduced third display part 851c is displayed. Additionally, a control panel region displayed in the second region of the second display part 851b can also be reduced in size to correspond to the reduced size of the third display part 851c.

Meanwhile, according to an embodiment, the second region of the second display part 851b can be used as an interaction region for the extended or reduced third display part 851c. For example, when a driver intends to perform a manipulation on content displayed on the third display part 851c through the second region of the second display part 851b, an interaction region for the third display part 851c can be layered and displayed on the control panel. In this case, the layered interaction region can disappear when the content displayed on the third display part 851c, for example, a widget screen, disappears or when there is no input for a predetermined time period.

FIG. 10 is a drawing for explaining a form factor modification that changes a degree of bending of the second display part 851b in response to an input request for the third display part 851c in the vehicle display device 800.

The second display part 851b can take one of a flat mode, a first bending mode having a first curvature size according to a degree of bending, and a second bending mode having a second curvature size based on a control command of the control part 880.

In this case, the first bending mode can correspond to a second form factor state, and the second curvature size can be a curvature value/range larger than the first curvature size. Additionally, in the second bending mode, the second curvature can be a maximum curvature that the display module of the second display part 851b can be driven. The first and second curvature sizes can be set during manufacturing or by a user setting. Additionally, a condition matching a change of the flat mode, the first bending mode, and the second bending mode can be set by a user setting.

When a degree of bending of the second display part 851b changes due to a form factor modification, the control part 880 can control adjustment to match an aspect ratio of the displayed screen.

According to an embodiment, the control part 880 can generate a form factor change request event based on a use request (e.g., input request) for the third display part 851c while the multiple displays are in the second form factor so as to allow the second display part 851b to be changed from the first bending mode to the second bending mode. Additionally, similarly, a form factor change request event can be generated to change from the second bending mode to the first bending mode based on a use release request (e.g., an end of an input) for the third display part 851c.

According to an embodiment, the control part 880 can recognize a use request for the third display part 851c when a touch is applied to a region of the second display part 851b, for example, a second region that is a lower portion of the bending region while the multiple displays are in the second form factor. Accordingly, as illustrated in FIG. 10, as a degree of curvature of a bent portion of the second display part 851b increases, a form factor modification request for changing to a second bending mode in which a bottom portion, that is, a second region thereof, is further raised and lowered (U) in a horizontal direction with respect to the lower mounting bracket B can be performed.

In this case, in the second bending mode, an interaction region (e.g., virtual keyboard) corresponding to a use request for the third display part 851c can be layered and displayed in the second region. Then, when the use request for the third display part 851c is released, a form factor modification can be performed in which the layered interaction region (e.g., virtual keyboard) disappears and the second display part 851b is restored to the first bending mode.

Meanwhile, when a degree of bending of the second display part 851b increases such that the second region is further raised and lowered in a horizontal direction, the driver's field of view can be obstructed, and thus a form factor change request can not be accepted in consideration of the driving situation of the vehicle, or the vehicle can be set to be driven when stopped or parked.

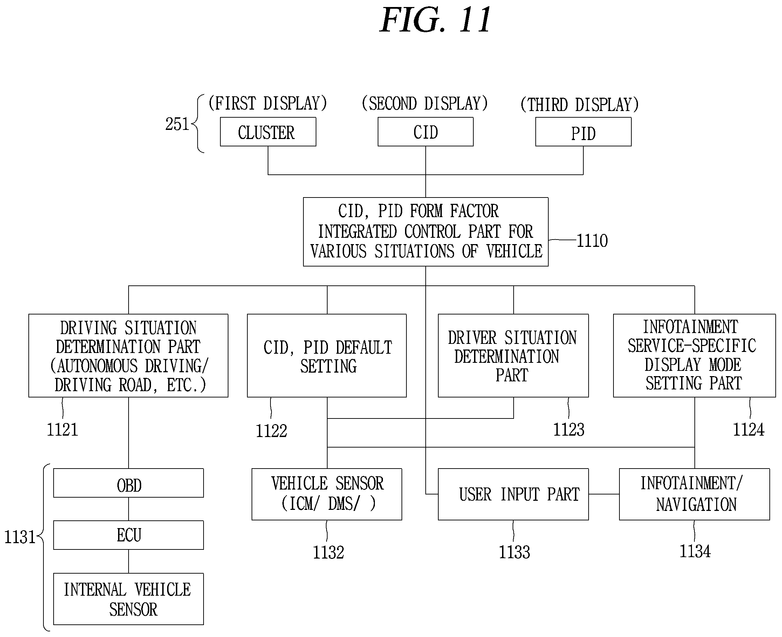

FIG. 11 is a block diagram for explaining an integrated control of a form factor modification among multiple displays according to various situations that can be generated in a vehicle.

Referring to FIG. 11, the display part 851 of the vehicle display device 800 can be implemented with multiple displays including a first display part, a second display part, and a third display part, and hereinafter, respectively referred to as a cluster, a CID, and a PID based on the installation location as described above. That is, hereinafter, the cluster refers to the first display part 851a, the CID refers to the second display part 851b, and the PID refers to the third display part 851c.

As described above, the display part 851 is driven (e.g., relative movement, relative rotation, bending-out/in, pop-up/down, roll-up/down, etc.) so as to allow each of the multiple displays to be independently changed in shape structure and take various form factors based on one or more combinations. The display part 851 is driven based on a control command according to a form factor change request generated by an integrated control part 1110.

The integrated control part 1110 integrally controls the driving of the shapes of the CID (second display part) and PID (third display part) in consideration of various driving situations of the vehicle. The integrated control part 1110 performs the same function as the processor (or control part 880) of the vehicle display device 800 described above, and can be understood as the same element.

The integrated control part 1110 includes a driving situation determination part 1121, a CID and PID default setting part 1122, a driver situation determination part 1123, and an infotainment content/service-specific display mode setting part 1124. The integrated control part 1110 integrates determinations from a plurality of determination parts and setting parts (1121 to 1124) to recognize the requested form factor and finally determine whether a change to that form factor is possible. Then, the integrated control part 1110 transmits a driving command for changing the form factor to the display part 851.

The driving situation determination part 1121 recognizes a driving state and driving mode of the vehicle. For example, the driving situation determination part 1121 determines whether the vehicle is in autonomous driving mode or driving on the road, and transmits it to the integrated control part 1110. To this end, the driving situation determination part 1121 can operate based on sensing data 1131 acquired by an internal vehicle sensor, ECU, OBD, or the like.

The CID and PID default setting part 1122 can be set by matching a default form factor taken in various driving situations of the vehicle. For example, the CID and PID default setting part 1122 can set a default form factor based on sensing data from a vehicle sensor 1132, such as an ICM (motion sensor), DMS (distance sensor), and the like. Additionally, the CID and PID default setting part 1122 can additionally set a default form factor based on the determination and setting of the driver situation determination part 1123 and the infotainment content/service-specific display mode setting part 1124.

For example, the CID and PID default setting part 1122 can preset each default form factor taken when the vehicle is driving and stopped, as detected through the vehicle sensor 1132, a default form factor taken when a PID use request is made, a default form factor matching a driving mode condition of the vehicle, a default form factor matching a driver's situation, and a default form factor matching an attribute of the requested content/service.

The driver situation determination part 1123 transmits an analysis result of data related to the driver's situation (e.g., whether to look forward, yawning, drowsiness, smoking, or being distracted) collected through the sensing data of the vehicle, for example, through an internal camera included in a driver monitoring system (DMS) and/or interior monitoring system (IMS), to the integrated control part 1110. The integrated control part 1110 can execute a form factor modification to guide the driver's driving or determine not to accept a form factor change request based on an analysis result of the driver situation determination part 1123.

The user input part 1133 receives a direct input from the driver/occupant for a form factor modification. For example, an input method of the user input part 1133 can include a manipulation on one of the multiple displays, such as a touch gesture (including a hover touch), as well as an input by fixing the gaze, a voice command, a camera-based gesture, and the like. Additionally, the user input part 1133 can additionally include an interaction region temporarily layered on one region of another display part (e.g., CID) in response to an input request for a specific display part (e.g., PID).

The infotainment content/service-specific display mode setting part 1124 sets a form factor that matches a content-specific attribute (e.g., screen extension mode). To this end, the content-specific attribute part 1134 can distinguish whether an attribute of content is, for example, driving-related content such as navigation, infotainment not directly related to driving, or an extended screen mode, and transmit it to the infotainment content/service-specific display mode setting part 1124.

Meanwhile, data related to determination conditions, settings, and the like of the driving situation determination part 1121, the CID and PID default setting part 1122, the driver situation determination part 1123, and the infotainment content/service-specific display mode setting part 1124 can be stored in the memory, or the like.

The integrated control part 1110 can control the driving of the CID and PID to change the form factor according to a driving situation such as a driving situation, an attribute of content/ service, or a request.

For example, when a form factor driving condition for switching the CID to a portrait mode is satisfied based on a manipulation on the PID, the integrated control part 1110 can control the driving so as to allow the CID to be raised and lowered while restoring the CID to a flat mode and relatively rotating the display to switch to a landscape mode. Additionally, for example, in a vehicle standby mode (e.g., before starting the vehicle/before starting driving after starting the vehicle), the drive can be controlled to form a first form factor in which the CID is in flat mode and portrait mode and the PID is in a pop-down state. Additionally, for example, while driving the vehicle, a form factor modification can be controlled such that the CID is in the first bending mode and the PID pops down to form a second form factor, or the CID is changed to the second bending mode.

When it is necessary to perform shape change for multiple displays in response to a form factor change request, the integrated control part 1110 can selectively perform either simultaneous control or sequential control since each can be driven independently. For example, the integrated control part 1110 can drive the PID after driving the CID or drive the CID and the PID simultaneously.

The integrated control part 1110 can perform form factor modification/maintenance according to preset priorities when there are conflicting/multiple form factor modification/maintenance requests.

Additionally, the integrated control part 1110 can set a default form factor differently according to a user setting. For example, when the driver rides alone, if personalization is configured to use the CID & PID as a single home screen, a form factor with the second bending mode applied to the CID can be performed as a default form factor instead of a second form factor in which the CID is in the first bending mode when the driving of the vehicle is detected.

Additionally, the integrated control part 1110 can determine whether content executed while driving the vehicle is in a portrait mode or landscape mode, and accordingly, maintain or change a current form factor. In this case, the integrated control part 1110 can readjust and display the aspect ratio and UI to match the display direction. For example, as the CID adjusts to an aspect ratio corresponding to a top and bottom of the screen in a portrait mode, when a left/right margin occurs, that margin can be used as an interaction region.

Additionally, the integrated control part 1110 can determine not to vary the form factor for content display only when that content is driving regulation content.

Specifically, the integrated control part 1110 can determine to maintain a second form factor (or a set default form factor) or a current form factor while a driving attention mode is detected based on the sensing data of the vehicle. Here, the driving attention mode can refer to a driver's driving on a general road based on the sensing data of the vehicle.

Meanwhile, when the driving attention mode is not detected, the integrated control part 1110 can sequentially or simultaneously generate a first request for changing a display direction of the CID and a second request for changing a screen size of the PID based on at least one of a user's input request and an attribute of screen-extendable content.

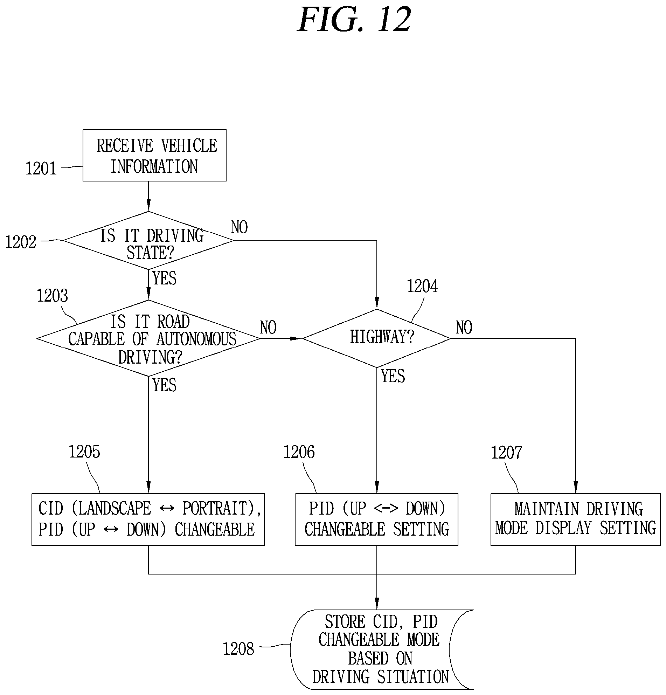

Hereinafter, FIG. 12 is a flowchart for explaining a possibility and an extent of a form factor modification among multiple displays depending on whether a vehicle is driving and a driving mode.

Referring to FIG. 12, the vehicle display device 800 can receive vehicle information from various vehicle sensors (e.g., OBD, ECU, etc.) (1201).

The vehicle display device 800 detects whether the vehicle is in a driving state above a predetermined speed based on the received vehicle information (1202). For example, if the driving speed of the vehicle is 10 km/h, then it is determined whether it is a road capable of autonomous driving (1203).

When the road is capable of autonomous driving, a form factor modifiable range is extended to a state in which both the CID and the PID can be driven (1205). On the contrary, when autonomous driving is not possible, it is further checked whether the driving road is a highway (1204). If it is a highway, it is set to a state in which only the PID can be driven while driving (1206). On the contrary, if it is confirmed that it is not a highway, the driver's attention driving mode is executed to maintain a driving mode display setting, for example, a second form factor (or default form factor) state (1207).

Next, a form factor modifiable range of the CID and the PID is stored based on driving situation (1208). This involves pre-memorizing display modes that can be changed based on driving situation for integrated control of the CID and the PID.

Specifically, since the driver's duty of attentive driving is further reduced in an autonomous driving mode, a form factor change range can be set so as to allow both the CID and the PID to be driven. Meanwhile, when the use of the PID is performed independently by an occupant in the passenger seat, a switchable privacy mode (SPM) can operate in an on state when the PID pops up. In this case, when the autonomous driving mode is ended, the PID automatically pops down to ensure the driver's field of view, and the CID is restored to a second form factor state in which the CID is in a portrait mode and a bent-out state.

Additionally, as a specific example, the form factor change range can be set so as to allow the CID to be freely driven even while driving. When a need for a driver to use the PID is detected, a form factor modification can be implemented in a structure in which a degree of bending of the CID increases so as to allow the CID to be easily used as an interaction region. For example, if the driver gazes at the PID while driving, it is recognized as an intention to use, and a degree of bending of the CID in the second form factor state can be further increased and changed to the second bending mode. Then, if there is no interaction with the PID for a predetermined time period or it is recognized that there is no gaze on the PID, a degree of bending of the CID can be reduced back to its original state and driven to return to the second form factor state.

If a form factor changeable range for each driving situation is preset in this way, when a form factor change event is generated based on a request input or an attribute of content/service, it can quickly determine whether to execute driving or not to accept the form factor change request in consideration thereof.

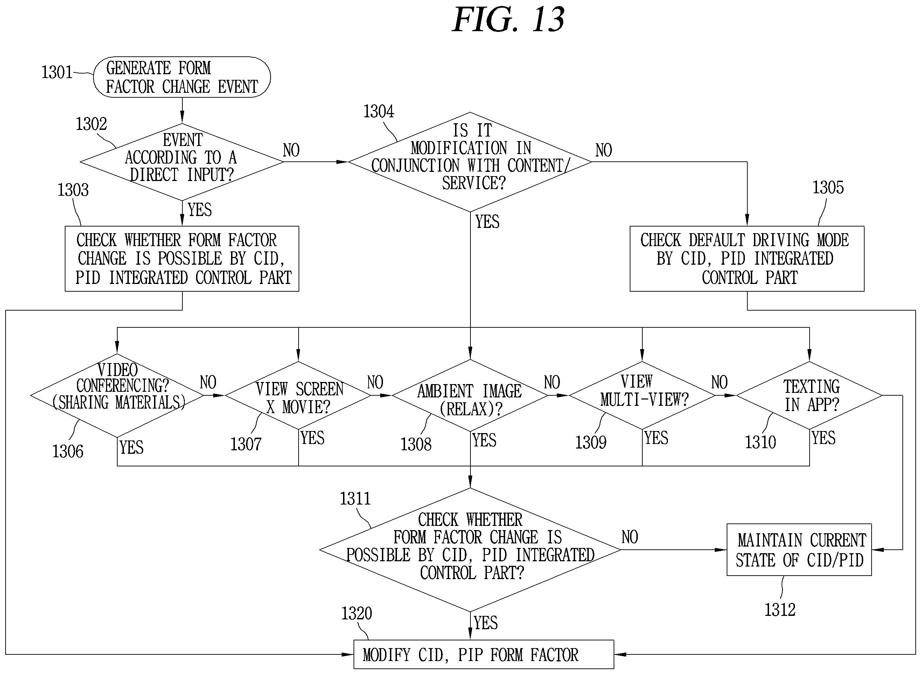

Hereinafter, FIG. 13 is a flowchart for explaining a method of processing a request based on a driving situation of a vehicle, an attribute of displayed content, and an input request when a form factor change request is generated. Meanwhile, an operation illustrated in FIG. 13 is performed by the processor (or control part 880) of the vehicle display device 800.

The processor (or control part 880) of the vehicle display device 800 can recognize a display extension request included in a form factor change request.

To this end, a request for a change to a second form factor can include a request for a change to a specific form factor based on the driving of multiple displays, and a request for extending and displaying related content on at least two of the multiple displays. For example, a form factor change request for rotating the CID to a landscape mode and popping up the PID can include a request for extending and displaying content currently displayed on the CID or PID to the CID and PID.

Meanwhile, the processor (or control part 880) can restrict at least one content from being extended to at least the first display part 851a, that is, the cluster, while the driver's driving is detected according to the driving situation of the vehicle.

For example, when a request for screen extension to the cluster and PID is detected, a screen of the cluster remains unchanged while the vehicle is driving. On the contrary, if the vehicle is not driving when such a request is made, a function related to the content screen being played on the CID can be extended and displayed on the cluster and PID after changing the form factor.

Referring to FIG. 13, the vehicle display device 800 is initiated by detecting the generation of a form factor change event (1301).

It is determined whether the form factor change event is an event according to a direct input (1302), and if it is a direct input, it is transmitted to the integrated control part 1110 (FIG. 11) to check whether the form factor is possible based on the direct input (1303).

On the contrary, when the form factor change event is not a direct input, it is determined whether it is a form factor modification in conjunction with content/a service (1304). In the case of a form factor modification in conjunction with content/a service, an appropriate form factor is determined based on a driving condition corresponding to a specific attribute.

Specifically, if it is a content/service attribute related to video conferencing (1306), it can be determined to take a form factor in which the CID is switched to a landscape mode and the PID pops up so as to allow multiple displays to be seamlessly connected.

Additionally, if it is a content/service attribute related to viewing a screen-extended image (1307), it can take a form factor in which the PID pops down to match the cluster so as to allow the CID, PID, and cluster screens to display the playback screen and associated list seamlessly at a glance.

Additionally, if it is a content/service attribute related to an ambient image for relaxation (1308), it can take a form factor in which the CID is switched to a landscape mode and the PID pops up so as to allow the ambient image to be seamlessly connected to the CID and PID.

Additionally, when if is a content/service attribute related to multi-view viewing (1309), for example, in the case of a sport multi-view or game multi-view, it can be determined as a form factor in which the CID is driven in a landscape mode and the PID pops up so as to display a multi-view image on the CID and easily display the selected one in a full screen on the PID.

Alternatively, if it is a content/service attribute related to text input within an application (1310), it can be determined as a form factor to have a second bending mode in which the CID is bent further upward in a horizontal direction so as to allow the driver or occupant to easily input text without obstructing the screen. In this case, an interaction region such as a virtual keyboard is layered in a lower second region modified into the second bending mode, and if an input is explicitly ended or there is no input for a predetermined time period, it can take a form factor in which the layered interaction region disappears and the CID is restored to take the first bending mode.

Once an appropriate form factor is determined in this way, the integrated control part 1110 (FIG. 11) checks whether a change to that form factor is possible (1311). When it falls within a form factor modifiable range, the CID and PID are driven independently to perform a form factor modification (1320). On the contrary, when the determined form factor is out of a modifiable range, a current form factor state of the CID/PID is maintained (1312).

Meanwhile, when the form factor change event is neither a direct input nor a content/service conjunction, the integrated control part 1110 (FIG. 11) checks a default form factor and performs driving. For example, it is driven by the second form factor while driving and driven by the first form factor when driving is stopped.

Meanwhile, when the vehicle is stopped in a form factor state in which the second display is in a landscape mode, an interaction related to the use of the content can be extended. For example, it can be easily performed through the first and third display parts 851a, 851c that allow extended use of content search and up-and-down depth movement based on an input to the second display part 851b, such as swiping, touch, and flicking input.

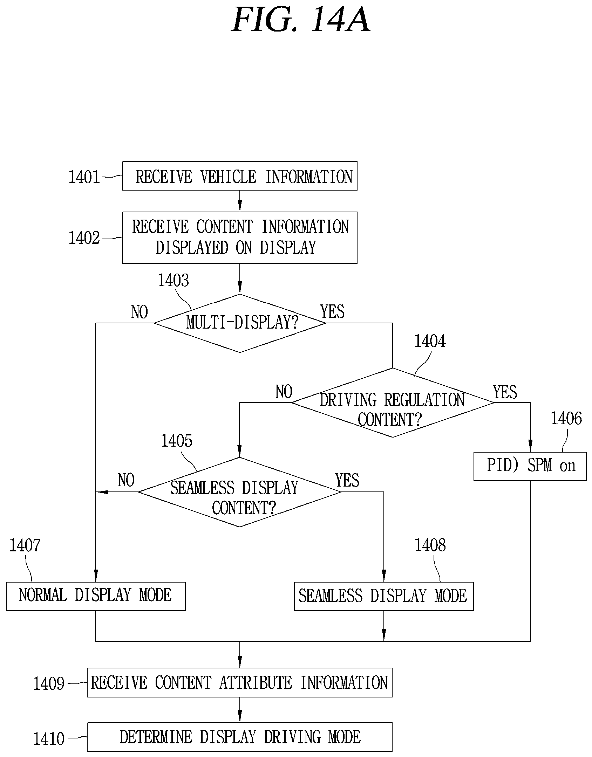

In this regard, FIG. 14A is a flowchart for explaining various operation modes that displays content on multiple displays according to a display mode of the requested form factor.

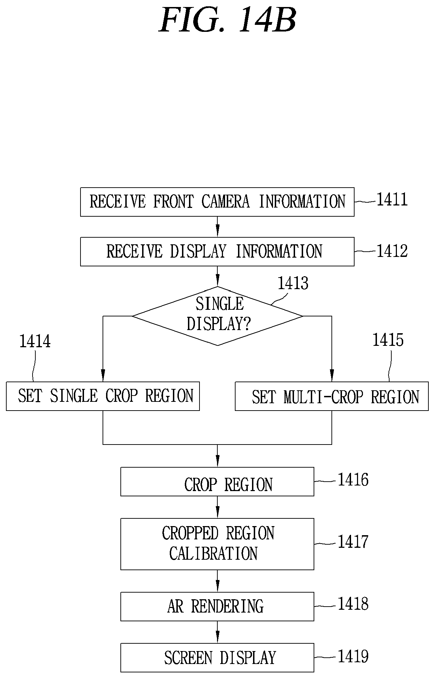

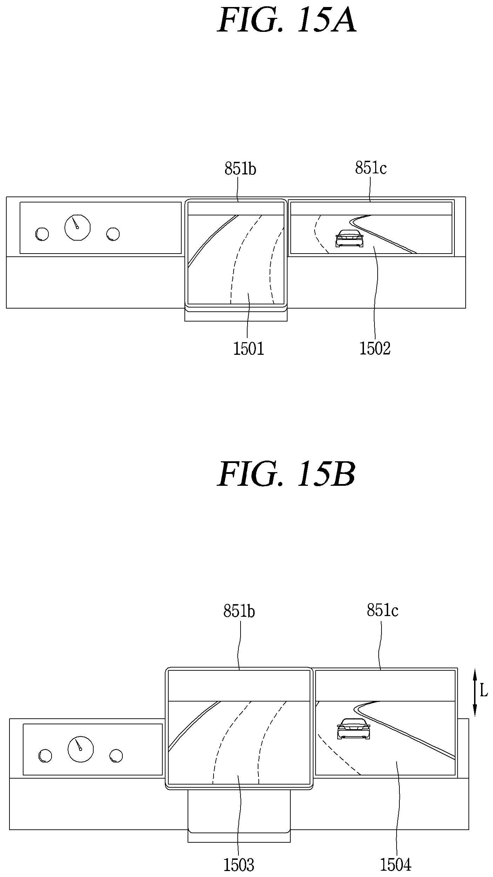

Additionally, FIG. 14B is a flowchart for explaining a method of seamlessly displaying content on multiple displays according to a display mode of the requested form factor, and FIGS. 15A and 15B are drawings for explaining a method of variably applying a crop region in relation to FIG. 14B.

In addition, each operation in the flowcharts of FIGS. 14A and 14B is performed by the processor (or control part 880) of the vehicle display device 800 unless otherwise noted.

First, referring to FIG. 14A, the vehicle display device 800 receives vehicle information (1401). In addition, the vehicle display device 800 receives content information displayed on multiple displays (1402).

Subsequently, it is determined whether multiple displays are used as a multi-display (1403), and if they are displayed independently, a normal display mode (1407) is performed.

When multiple displays are used as a multi-display, it is checked whether it is driving regulation content (1404). Here, driving regulation content refers to content having an infotainment attribute not related to the driving of the vehicle, such as music playback, movie viewing, or an execution screen of a specific application (not navigation). Meanwhile, driving regulation content is applied only when the vehicle is in a driving state. Therefore, even if it is driving regulation content listed above, multiple displays can be used as an extended screen when the vehicle is in a parked or stopped state.

When it is not driving regulation content (or when the vehicle is in a parked or stopped state), it is checked whether the displayed content is seamless display content (1405). Here, the seamless display content refers to content having an attribute in which one content is connected to and displayed on multiple displays, such as in an extended screen mode.

If it is not seamless display content, a normal display mode (1407) is performed. If it is seamless display content, it is determined to be a seamless display mode (1408). Then, the attribute information of current content is received (409), and the display driving mode is determined (410) to display the content by adjusting the corresponding aspect ratio and UI, and the like.

Meanwhile, in the case of driving regulation content, the display of the PID is separated from the cluster and the CID, and used independently. To this end, the PID operates in a switchable privacy mode (SPM) (1406). Accordingly, the driver cannot see the content displayed on the PID, thereby allowing an occupant in the passenger seat to freely watch the content without distracting driving.

Meanwhile, even if it is not driving regulation content, the cluster and CID can be used separately from or used in conjunction with the PID based on an input or setting. When separated, the driver's first terminal is automatically operated in conjunction with the CID, and the occupant's second terminal is automatically operated in conjunction with the PID, thereby allowing independent conjunction control through each terminal. Alternatively, even while the vehicle is parked or stopped, the driver can view first content through the cluster and CID, and the occupant in the passenger seat can freely view second content through the PID while the SPM is activated.

Meanwhile, referring to FIGS. 14B, 15A, and 15B, when displaying a driving-related image using multiple displays, a method for performing a seamless display in consideration of a form factor modification will be described.

When at least one content is extended to the second and third display parts 851b, 851c in response to a form factor change request, the vehicle display device 800 can determine a display mode of that content based on an attribute of the content and a shape of the form factor to be changed, and vary and apply a crop region for screen extension according to the determined display mode.

For example, when the second and third display parts 851b, 851c are displayed and extended in a landscape mode and a pop-up form factor state, and a vehicle front image is displayed thereon as a driving-related image, cropping and connection according to the aspect ratio must be performed for seamless connection.

Specifically, referring to FIG. 14B, the vehicle display device 800 can receive image information collected through a front camera of the vehicle (1411). Additionally, the vehicle display device 800 can receive information on a current display mode (1412).

Whether the current display mode is a single display is checked (1413), and in such a case, a single crop region is set (1414). In this case, it will be sufficient to perform the cropping in consideration of only the aspect ratio of a single display.

On the contrary, in the case of a multi-display mode, a multi-crop region corresponding to a multi-display in conjunction therewith is set (1415). Specifically, multiple crop regions for received image information are set according to a driving condition of each display, and the setting of a multi-crop region can include adjusting a size or location of the image, editing a portion of the region, and adjusting transparency.

A region is cropped (1416) according to the set single crop region or multi-crop region, and calibration is performed on the cropped region (1417). Then, AR rendering is performed through an AR renderer (not shown) (1418), and then displayed on a screen of a single display or multi-display screen (1419).

FIG. 15A shows a cropped front image seamlessly displayed as a first portion 1501 and a second portion 1502, respectively, in a form factor in which the second display part 851b is in portrait mode and the third display part 851c is in a pop-down state.

FIG. 15B shows a cropped front image seamlessly displayed in a first modified portion 1503 and a second modified portion 1504, respectively, in a form factor in which the second display part 851b is in landscape mode and the third display part 851c pops up by a variable length L.

As described above, according to a vehicle display device and an operation method thereof in accordance with an embodiment of the present disclosure, a form factor of multiple displays can be changed to an optimal type to match a driving situation of a vehicle, the need of an occupants, and the provided content/service, thereby ensuring a driver's field of view as well as improving infotainment usability for each situation. Additionally, the present disclosure provides an experience in which related content or services are provided in a more efficient and seamless format as the form factor varies according to a current driving mode of the vehicle. Additionally, a fellow passenger in a passenger seat does not need to separately request a display manipulation, and a driver and the fellow passenger can operate respective devices by operating in conjunction with a display without distracting each other. Furthermore, the present disclosure can provide various experiences in which an interior of the vehicle can be used in a desired form, such as an office space for video conferencing, a large screen viewing space for providing screen-extended content, and the like.

The foregoing present disclosure can be implemented as codes readable by a computer on a medium written by the program. The computer-readable media includes any type of recording apparatus in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage apparatus and the like, and also include an apparatus implemented in the form of a carrier wave (e.g., transmission over the Internet). In addition, the computer can also include a controller/processor of the personal drive system 800. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A display device for a vehicle, the device comprising:
a main body that can be mounted on a dashboard of the vehicle;
multiple displays formed on a front surface of the main body, the multiple displays comprising a first display, a second display, a portion of which is provided to be bendable, and a third display provided to be variable in size of the display screen; and
a processor that controls the multiple displays to change, in response to the detection of driving of the vehicle while the second display of the multiple displays forms a flat first form factor, to a second form factor different from the first form factor, determine that there is a request for a change to the second form factor based on at least one of the sensing data of the vehicle, content displayed on the multiple displays, and an input request, and check whether a change to the second form factor is possible based on a driving situation of the vehicle so as to execute a change to the form factor according to the determination.

2. The device of claim 1, wherein the second form factor has a structure in which the second display relatively moves in a first direction and at least a portion thereof is bent, and
wherein the processor transmits a signal for changing to the second form factor to the multiple displays in response to a driving detection signal of the vehicle.

3. The device of claim 2, wherein the first form factor has a structure in which the second display is flattened while relatively moving in a second direction opposite to the first direction, and
wherein the processor transmits a signal for changing to the first form factor to the multiple displays in response to a driving stop signal of the vehicle.

4. The device of claim 1, wherein the request for a change to the second form factor is generated based on at least one of a vehicle driving mode based on the sensing data of the vehicle, an attribute of content displayed on the multiple displays, and a user input request for the multiple displays, and
wherein the processor determines whether to accept the request for a change to the second form factor in consideration of the driving situation of the vehicle related to the sensing data of the vehicle.

5. The device of claim 4, wherein the third display is supported by a first frame and a second frame formed to be movable relative to the first frame, and
wherein the processor generates a form factor change request event based on an attribute of content displayed on the multiple displays and an input request so as to allow a screen size of the third display to be changed by varying a front exposure area according to a relative movement of the second frame.

6. The device of claim 5, wherein the processor recognizes that content displayed on the multiple displays is an infotainment attribute, and generates a form factor change request event for changing the screen size of the third display based on an input request for the second display.

7. The device of claim 4, wherein the second display can operate in one of a flat mode in which the display is flat, and a first bending mode and a second bending mode in which a degree of bending of at least a portion of the display is different, and
wherein the processor generates a form factor change request event in which the second display is varied from the first bending mode to the second bending mode based on a use request for the third display in the second form factor.

8. The device of claim 7, wherein the processor recognizes a touch of a region of the second display in the second form factor state as a use request for the third display to generate a form factor change request event for changing a second bending mode in which a curvature of a bent portion of the second display is changed and a bottom portion is raised and lowered.

9. The device of claim 4, wherein the second display is provided to rotate with respect to the main body so as to change a screen direction of the display, and
wherein the processor generates a form factor change request event in which the bending of the second display is restored and the screen direction of the display is changed by relative rotation based on at least one of an attribute of content displayed on the multiple displays and a user's input request.

10. The device of claim 4, wherein the processor determines to maintain the second form factor or a current form factor while a driving attention mode is detected based on the sensing data, and
wherein the driving attention mode comprises a driver's driving on a general road based on the sensing data.

11. The device of claim 10, wherein the processor sequentially or simultaneously generates a first request for changing a display direction of the second display and a second request for changing a screen size of the third display based on at least one of an attribute of screen-extendable content and a user input's request while the driving attention mode is not detected.

12. The device of claim 11, wherein the request for a change to the second form factor comprises:
a request for extending and displaying the at least one content on two or more of the first to third displays after changing the form factor according to the first and second requests, and
wherein the processor controls the at least one content so as not to be extended to at least the first display while a driver's driving is detected according to the driving situation of the vehicle.

13. The device of claim 12, wherein the processor determines, when the at least one content is extended to the second and third displays in response to the second form factor change request, a display mode of that content based on an attribute of the content and a type of the form factor to be changed, and varies a crop region for screen extension according to the determined display mode.

14. The device of claim 11, wherein the processor maintains a current form factor of the multiple displays based on the driver's driving being detected according to the driving situation of the vehicle and the at least one content being driving regulation content, and executes a switchable privacy mode (SPM) for the third display to display the at least one content.

15. The device of claim 1, wherein the processor controls, after a change to the second form factor, the multiple displays to modify the changed form factor into a previous state or the second form factor in consideration of the driving situation of the vehicle identified based on the sensing data of the vehicle.

16. A method of operating a vehicle display device comprising multiple displays formed on a front surface of a main body that can be mounted on a dashboard of a vehicle, the multiple displays comprising a first display, a second display, a portion of which is provided to be bendable, and a third display provided to be variable in size of the display screen, the method comprising:
detecting the driving of the vehicle while the second display of the multiple displays forms a flat first form factor to change the multiple displays to a second form factor different from the first form factor;
determining that there is a request for a change to the second form factor based on at least one of the sensing data of the vehicle, content displayed on the multiple displays, and an input request; and
checking whether a change to the second form factor is possible based on a driving situation of the vehicle to execute a change to the form factor according to the determination.
